# EUROPEAN PATENT SPECIFICATION

(11) **EP 3 293 908 B1**
(45) Date of publication and mention of the grant of the patent: **25.12.2019**
(21) Application number: 17188282.2
(22) Date of filing: 29.08.2017
(51) Int. Cl.: H04L 1/20, H04L 1/24, H04L 1/00, H04B 10/077, H04L 12/26, H04W 52/20, H04J 14/02

(54) **METHOD FOR COMPENSATING BIT ERROR AFTER FORWARD ERROR CORRECTION, CODING PROCESSING APPARATUS, AND DECODING PROCESSING APPARATUS**
VERFAHREN ZUR KOMPENSATION VON BITFEHLERN NACH EINER VORWÄRTSFEHLERKORREKTUR, CODIERUNGSVERARBEITUNGSVORRICHTUNG UND DECODIERUNGSVERARBEITUNGSVORRICHTUNG
PROCÉDÉ DE COMPENSATION D'ERREUR BINAIRE APRÈS CORRECTION D'ERREUR SANS VOIE DE RETOUR, APPAREIL DE TRAITEMENT DE CODAGE ET APPAREIL DE TRAITEMENT DE DÉCODAGE

(30) Priority: 29.08.2016 CN 201610753682
(43) Date of publication of application: 14.03.2018
(73) Proprietor: HUAWEI TECHNOLOGIES CO., LTD., Guangdong 518129 (CN)
(72) Inventor: WANG, Chuanbiao, Shenzhen, Guangdong 518129 (CN); CUI, Zhenwei, Shenzhen, Guangdong 518129 (CN)
(74) Representative: Körber, Martin Hans

(56) References cited:
- US-A1- 2006 200 710
- US-B1- 6 684 351
- US-B1- 7 032 139
- WASCHURA T: "USING BIT-ERROR-RATE TESTERS TO TEST-DRIVE FEC CODES", EDN ELECTRICAL DESIGN NEWS.(TEXAS INSTRUMENT), REED BUSINESS INFORMATION, HIGHLANDS RANCH, CO, US, vol. 48, no. 19, 4 September 2003 (2003-09-04), XP001177666, ISSN: 0012-7515

## Description

### TECHNICAL FIELD

The present invention relates to the field of communications technologies, and in particular, to a method for compensating a bit error after forward error correction, a coding processing apparatus, and a decoding processing apparatus.

### BACKGROUND

With rapid development of the Internet and mobile services, a bandwidth requirement of a large data center increases rapidly. Therefore, increasing a one-port rate of an optical transmission module becomes an urgent need of a system operator. A higher order modulation scheme such as 4 pulse amplitude modulation (PAM4) is one of the most attractive solutions for resolving a requirement for a large capacity and low costs on a current client side. The PAM4 may double a total transmission capacity of a system without changing a channel quantity or single carrier bandwidth. A modulation and demodulation manner of the PAM4 is relatively simple, only a simple low-power-consumption digital signal processor (DSP) needs to be used at a transmit end, and this is an extremely efficient modulation manner. The PAM4 modulation manner is considered as a modulation solution of a service scenario of 400 Gigabit Ethernet (GE).

Compared with a conventional non return to zero (NRZ) modulation manner, the PAM4 modulation manner is a multi-level modulation manner, and an anti-noise capability of a signal is weakened. At same signal power, an eye height of a single electric eye diagram in the PAM4 modulation manner is 1/3 of that in the NRZ modulation manner. In a same noisy channel, a signal to noise ratio (SNR) of the PAM4 is lower than that of the NRZ by 9.5 dB. Due to interference of a Gaussian noise of a channel and multipath interference (MPI) between connector end faces in an optical channel, a risk of a burst error increases, and a bit error rate of the system increases. A PAM4 transmission system needs forward error correction (FEC) to improve a bit error after correction. Therefore, a capability of correcting the burst error by using FEC needs to be evaluated and designed.

In a fiber transmission and reception system, a bit error of the system is related to a noise distribution probability. To meet a requirement of the bit error rate of the system, a bit error rate caused by noises need to be lower than a bit error rate required in system design. For a conventional optical module on a client side, to ensure security and reliability of a system, a long-term bit error test is required to be performed on the module before delivery, and the module can work normally after traversing all states of noise distribution in a Gaussian channel. As a rate of a transmission port increases, a bit error rate after correction needs to be further reduced, and time for conventional long-term bit error testing further increases. Consequently, development efficiency of the module is reduced.

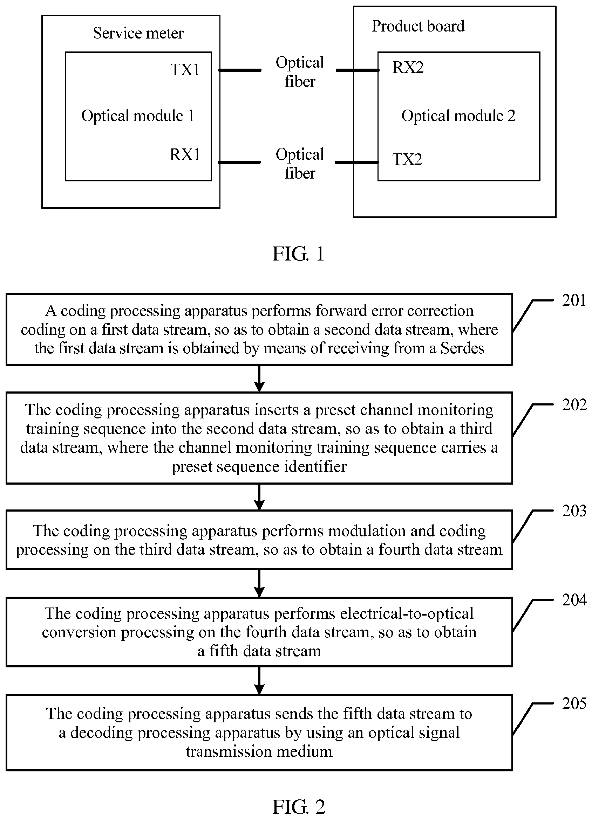

For example, in a fiber transmission and reception system using the NRZ, a bit error rate of the system is closely related to a noise distribution probability in a channel. To ensure reliability of long-term work of the system, a long-term bit error test needs to be performed. A testing block diagram is shown in FIG. 1. A service meter is a device for transmitting and receiving an Ethernet service data stream. A transmit end provides data stream payload generated by simulating a real scenario, and encapsulates the payload into a service signal that is of a frame format and that meets a system transmission requirement. A receive end extracts the payload from the received signal to perform a bit error test. An optical fiber is used for interconnection between optical interfaces of modules, and is a transmission medium of an optical signal. A product board provides drive control and instruction control for the optical module to implement loopback of a data stream inside the optical module. The optical module is an apparatus for forwarding and processing optical and electrical data. For example, an optical module 1 and an optical module 2 are respectively disposed in the service meter and the product board in FIG. 1. TX1 is used to indicate an output end in the optical module 1, and RX1 is used to indicate an input end in the optical module 1. TX2 is used to indicate an output end in the optical module 2, and RX2 is used to indicate an input end in the optical module 2. An electrical signal is converted into an optical signal at an input end, and an optical signal is converted into an electrical signal at an input end. The optical module performs clock data recovery on a signal, and further provides a necessary service monitoring function.

In an example of the scenario shown in FIG. 1, the service meter inputs, by using an electrical interface of the optical module 1, data that meets a service transmission criterion (for example, meets a criterion or a requirement such as a rate or a frame structure) to the optical module 1 for processing. TX1 transmits the data in a form of an optical signal, and TX1 is connected to the receive end RX2 of the to-be-tested optical module 2 by using an optical fiber. The optical module 2 receives and processes the data, then loops back the data to the transmit end TX2, and transmits the data in a form of an optical signal. TX2 is connected to the receive end RX1 of the optical module 1 by using an optical fiber. The optical module 1 outputs the data to the service meter after receives and processes the data, and the service meter collects statistics about bit errors. A long-term bit error test generally lasts 24 hours, and once a bit error occurs, the optical module needs to be adjusted and retested. Therefore, problems of long testing time and low testing efficiency exist. In the foregoing testing scenario, a channel noise characteristic is estimated blindly. Receive power needed by the optical module is much higher than an actual sensitivity point, and therefore a reserved link power budget is reduced. With improvement of a transmission port capacity, the link power budget is further limited, and power of the optical module needs to be precisely selected. However, the power of the optical module cannot be precisely adjusted in the prior art.

US 7 032 139 B1 discloses a method for network bit error rate testing in Ethernet networks. T. Waschura, "Using bit-error-rate testers to test-drive FEC codes", Electrical Design News, vol. 48, no. 19, pages 81-84, 4 Sept. 2003, discloses considering a burst error probability distribution in bit error rate testing. US 6 684 351 B1 discloses bit error rate testing of FEC encoded data using test patterns. US 2006/0200710 A1 discloses channel pre-emphasis to minimize the measured bit error rate.

### SUMMARY

Embodiments of the present invention provide a method for compensating a bit error after forward error correction, a coding processing apparatus, and a decoding processing apparatus, to reduce bit error analysis time required after forward error correction, and implement precise adjustment of power of an optical module.

To resolve the foregoing technical problems, the embodiments of the present invention provide the following technical solutions:

According to a first aspect, an embodiment of the present invention provides a method performed by a coding processing apparatus for compensating a bit error after forward error correction. An external data stream that needs to be transmitted is first sent from an external data source to a parallel-serial and serial-parallel converter (Serdes). A receive end of the Serdes may obtain the external data stream. The Serdes may perform clock data recovery and rate allocation on the data stream, so as to obtain a first data stream. Then, the Serdes sends the first data stream to the coding processing apparatus. The coding processing apparatus performs FEC coding on the first data stream, so as to obtain a second data stream, where the first data stream on which FEC coding is performed is referred to as the second data stream. The coding processing apparatus presets a channel monitoring training sequence, and inserts the channel monitoring training sequence into a tail of the second data stream, so as to obtain a third data stream, wherein the third data stream comprises: the second data stream and the channel monitoring training sequence inserted into the tail of the second data stream, where the channel monitoring training sequence carries a preset sequence identifier. For example, the channel monitoring training sequence may be a binary bit symbol stream. The coding processing apparatus performs modulation and coding processing on the third data stream, so as to obtain a fourth data stream. The coding processing apparatus performs electrical-to-optical conversion processing on the fourth data stream, so as to obtain a fifth data stream. The coding processing apparatus sends the fifth data stream to a decoding processing apparatus by using an optical signal transmission medium. In this embodiment of the present invention, because the coding processing apparatus inserts the channel monitoring training sequence into a data stream of a transmit end, where the channel monitoring training sequence may be used to estimate a channel bit error characteristic, the decoding processing apparatus can detect the channel monitoring training sequence in a received data stream according to a sequence identifier. In this embodiment of the present invention, a long-term bit error test is not needed, and a burst error rate after forward error correction may be accurately predicted by detecting the channel monitoring training sequence. Therefore, bit error analysis time required after forward error correction is greatly reduced, and precise adjustment of power of an optical module is also implemented.

With reference to the first aspect, in a first possible implementation of the first aspect, after the coding processing apparatus performs electrical-to-optical conversion processing on the fourth data stream, so as to obtain the fifth data stream, if the fifth data stream includes optical signals of transmitters with different wavelengths, an optical multiplexing module in the coding processing apparatus may be used to complete optical multiplexing processing of the fifth data stream, so that the optical signals of transmitters with different wavelengths can be multiplexed into a same channel. For example, the coding processing apparatus performs optical multiplexing processing on the fifth data stream, so as to obtain the fifth data stream on which optical multiplexing is performed.

With reference to the first aspect, in a second possible implementation of the first aspect, after the coding processing apparatus performs modulation and coding processing on the third data stream, so as to obtain the fourth data stream, to compensate following insufficient bandwidth, the coding processing apparatus may further perform pre-amplification processing on a high frequency component of the fourth data stream. The coding processing apparatus performs pre-amplification processing on the high frequency component in the fourth data stream, so as to obtain the fourth data stream on which pre-amplification is performed. The coding processing apparatus performs electrical-to-optical conversion processing on the fourth data stream on which pre-amplification is performed, so as to obtain the fifth data stream.

With reference to the second possible implementation of the first aspect, in a third possible implementation of the first aspect, after the coding processing apparatus performs pre-amplification processing on the high frequency component in the fourth data stream, so as to obtain the fourth data stream on which pre-amplification is performed, a driver may be configured in the coding processing apparatus to perform signal amplitude amplification processing on the fourth data stream, so that the fourth data stream can be converted into an electrical signal that can drive a transmitter. For example, the coding processing apparatus performs signal amplitude amplification processing on the fourth data stream on which pre-amplification is performed, so as to obtain the fourth data stream whose signal amplitude is amplified. The coding processing apparatus performs electrical-to-optical conversion processing on the fourth data stream whose signal amplitude is amplified, so as to obtain the fifth data stream.

According to a second aspect, an embodiment of the present invention further provides a method performed by a decoding processing apparatus for compensating a bit error after forward error correction. The decoding processing apparatus and a coding processing apparatus may be connected by using an optical signal transmission medium. For example, the decoding processing apparatus and the coding processing apparatus are connected by using an optical fiber. In the foregoing described method embodiment of the coding processing apparatus, the coding processing apparatus sends a fifth data stream to the decoding processing apparatus by using an optical signal transmission medium, and the decoding processing apparatus receives an original data stream by using the optical signal transmission medium, where the original data stream is a data stream obtained after the decoding processing apparatus receives the fifth data stream sent by the coding processing apparatus. The decoding processing apparatus performs optical-to-electrical conversion processing on the original data stream, so as to obtain a sixth data stream, where the sixth data stream is a data stream obtained after the decoding processing apparatus converts the original data stream received from the optical signal transmission medium from an optical signal to an electrical signal. "The sixth data stream" and "a seventh data stream" herein, and a subsequently described data stream do not mean an order of a data stream, but specifically means a manner in which the data stream is defined in different signal processing phases. The decoding processing apparatus performs modulation and decoding processing on the sixth data stream, so as to obtain a seventh data stream. A modulation and decoding manner used by the decoding processing apparatus is corresponding to a modulation and coding manner used by the coding processing apparatus. The decoding processing apparatus obtains a sequence decision value after detecting a sequence identifier in the seventh data stream, and defines the sequence decision value as a channel monitoring training sequence detection value. The decoding processing apparatus performs burst error statistics collection on the channel monitoring training sequence detection value, so as to obtain a burst error statistical result, and the decoding processing apparatus calculates a prediction value of a burst error rate in a linear fitting manner after forward error correction according to the burst error statistical result. The decoding processing apparatus further presets a bit error threshold after forward error correction, and according to the foregoing calculated prediction value of a burst error rate after forward error correction, determines whether the prediction value of a burst error rate is greater than the bit error threshold after forward error correction, calculates a numerical proportional relationship between the prediction value of a burst error rate and the bit error threshold after forward error correction, and outputs a numerical calculation result to a microprocessor; and the microprocessor adjusts power of the coding processing apparatus and/or the decoding processing apparatus according to the numerical calculation result. For example, after the decoding processing apparatus calculates the prediction value of a burst error after forward error correction according to the burst error statistical result, the decoding processing apparatus calculates the numerical relationship between the prediction value of a burst error rate after forward error correction and the preset bit error threshold after forward error correction, and outputs the numerical calculation result to the microprocessor, and the microprocessor adjusts the power of the coding processing apparatus and/or the decoding processing apparatus according to the numerical calculation result. In this embodiment of the present invention, because the coding processing apparatus in this embodiment of the present invention inserts a channel monitoring training sequence into a data stream of a transmit end, where the channel monitoring training sequence may be used to estimate a channel bit error characteristic, the decoding processing apparatus can detect the channel monitoring training sequence in a received data stream according to a sequence identifier. In this embodiment of the present invention, a long-term bit error test is not needed, and a burst error rate after forward error correction may be accurately predicted by detecting the channel monitoring training sequence. Therefore, bit error analysis time required after forward error correction is greatly reduced, and precise adjustment of power of an optical module is also implemented.

With reference to the second aspect, in a first possible implementation of the second aspect, there may be multiple manners in which the decoding processing apparatus detects the sequence identifier in the seventh data stream. For example, detection of a value of a specified symbol is performed on a binary symbol in the seventh data stream. The coding processing apparatus may insert the channel monitoring training sequence into a tail of the data stream of the transmit end, and therefore, when the decoding processing apparatus detects the sequence identifier in the seventh data stream, and when the sequence identifier is detected in the seventh data stream, the channel monitoring training sequence detection value is obtained in the seventh data stream from the sequence identifier to a tail of the seventh data stream.

With reference to the second aspect, in a second possible implementation of the second aspect, if the coding processing apparatus performs optical multiplexing processing on the data stream of the transmit end, so that optical signals of transmitters with different wavelengths may be multiplexed into a same channel. The decoding processing apparatus may perform optical demultiplexing processing on the original data stream, so that the signals with different wavelengths in the same optical fiber channel are demultiplexed and then allocated to different receive channels. For example, the decoding processing apparatus performs optical demultiplexing processing on the received original data stream, so as to obtain the original data stream on which optical demultiplexing is performed.

With reference to the second aspect, in a third possible implementation of the second aspect, to mitigate intersymbol interference impact, the decoding processing apparatus may further perform signal balancing processing on the sixth data stream, so as to obtain the sixth data stream on which signal balancing is performed. After the decoding processing apparatus performs optical-to-electrical conversion processing on the original data stream, so as to obtain the sixth data stream, the decoding processing apparatus performs signal balancing processing on the sixth data stream, so as to obtain the sixth data stream on which signal balancing is performed.

With reference to the second aspect, in a fourth possible implementation of the second aspect, the decoding processing apparatus may calculate the prediction value of a burst error rate in a first order linear fitting manner. First, statistics about at least two lengths of consecutive burst errors and a time interval at which each length of consecutive burst errors is generated in the channel monitoring training sequence detection value are collected. For example, statistics about three lengths of consecutive burst errors may be collected, the lengths of consecutive burst errors may be a length of one bit error, a length of two bit errors, and a length of three bit errors, and then a time interval at which each length is generated is calculated. First order linear fitting is performed according to the lengths of consecutive burst errors and the time intervals, so that a first order linear function between a time interval and a length of consecutive burst errors can be calculated, and the prediction value of a burst error rate after forward error correction is calculated according to the first order linear function.

According to a third aspect, an embodiment of the present invention further provides a coding processing apparatus, including: a forward error correction coding module, configured to perform forward error correction FEC coding on a first data stream, so as to obtain a second data stream, where the first data stream is received from a parallel-serial and serial-parallel converter Serdes; a sequence insertion module, configured to insert a preset channel monitoring training sequence into a tail of the second data stream, so as to obtain a third data stream, and the third data stream comprises: the second data stream and the channel monitoring training sequence inserted into the tail of the second data stream, where the channel monitoring training sequence carries a preset sequence identifier; a modulation and coding module, configured to perform modulation and coding processing on the third data stream, so as to obtain a fourth data stream; an electrical-to-optical conversion module, configured to perform electrical-to-optical conversion processing on the fourth data stream, so as to obtain a fifth data stream; and a sending module, configured to send the fifth data stream to a decoding processing apparatus by using an optical signal transmission medium.

With reference to the third aspect of the present invention, a composition module of the coding processing apparatus may further perform steps described in the first aspect and all possible implementations. For details, refer to the foregoing description of the first aspect and all possible implementations.

According to a fourth aspect, an embodiment of the present invention further provides a decoding processing apparatus, including: a receiving module, configured to receive an original data stream by using an optical signal transmission medium, where the original data stream is a data stream obtained after a fifth data stream sent by a coding processing apparatus is received; an optical-to-electrical conversion module, configured to perform optical-to-electrical conversion processing on the original data stream, so as to obtain a sixth data stream; a modulation and decoding module, configured to perform modulation and decoding processing on the sixth data stream, so as to obtain a seventh data stream; a sequence detection module, configured to obtain a channel monitoring training sequence detection value from the seventh data stream, where the channel monitoring training sequence detection value is a sequence decision value obtained after sequence identifier detection is performed on a channel monitoring training sequence sent by the coding processing apparatus; and a burst error processing module, configured to: perform burst error statistics collection on the channel monitoring training sequence detection value, so as to obtain a burst error statistical result, and calculate a prediction value of a burst error rate in a linear fitting manner after forward error correction according to the burst error statistical result. The burst error processing module is further configured to: after calculating the prediction value of a burst error rate after forward error correction according to the burst error statistical result, calculate a numerical relationship between the prediction value of a burst error rate after forward error correction and a preset bit error threshold after forward error correction, and output a numerical calculation result to a microprocessor, so that the microprocessor adjusts power of the coding processing apparatus and/or the decoding processing apparatus according to the numerical calculation result.

With reference to the fourth aspect of the present invention, a composition module of the decoding processing apparatus may further perform steps described in the second aspect and all possible implementations. For details, refer to the foregoing description of the second aspect and all possible implementations.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings.
FIG. 1 is a structural block diagram of a long-term bit error test performed on an optical module in the prior art;
FIG. 2 is a schematic block flowchart of a method for compensating a bit error after forward error correction according to an embodiment of the present invention;
FIG. 3 is a schematic block flowchart of another method for compensating a bit error after forward error correction according to an embodiment of the present invention;
FIG. 4 is a schematic architectural diagram of an application system of a method for compensating a bit error after forward error correction according to an embodiment of the present invention;
FIG. 5 is a schematic architectural diagram of another application system of a method for compensating a bit error after forward error correction according to an embodiment of the present invention;
FIG. 6 is a schematic architectural diagram of a scenario of statistics collection of a burst error length according to an embodiment of the present invention;
FIG. 7-a is a schematic structural diagram of composition of a coding processing apparatus according to an embodiment of the present invention;

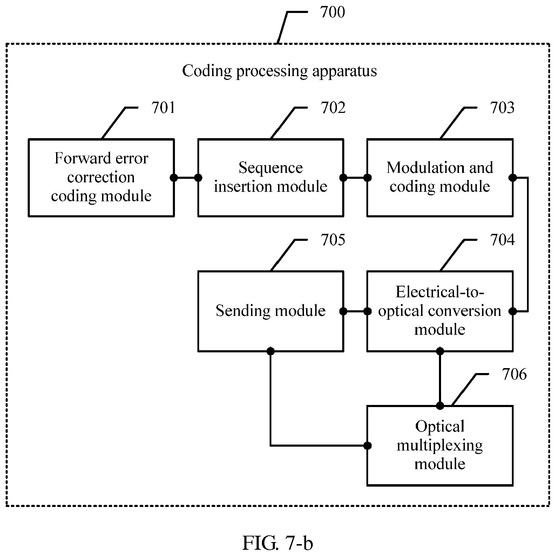

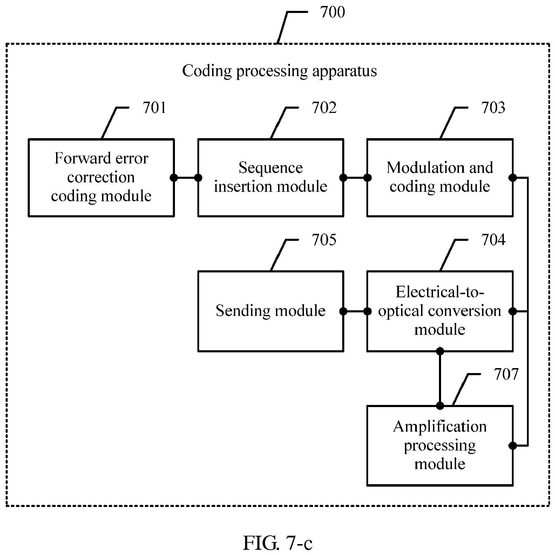

FIG. 7-b is a schematic structural diagram of composition of another coding processing apparatus according to an embodiment of the present invention;
FIG. 7-c is a schematic structural diagram of composition of another coding processing apparatus according to an embodiment of the present invention;

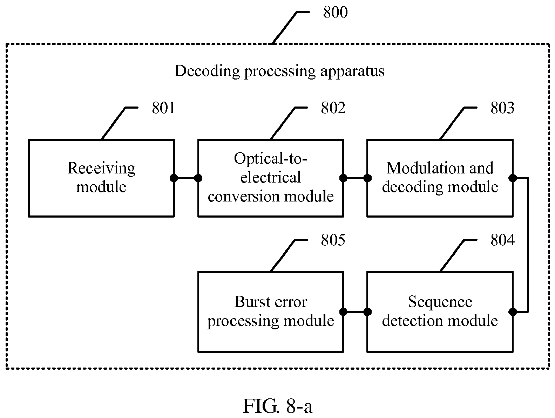

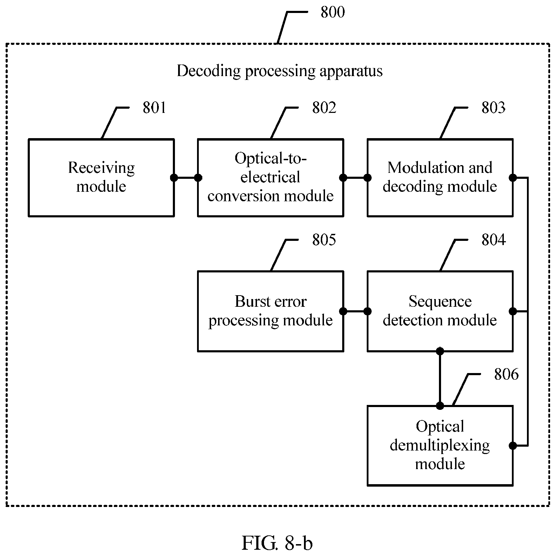

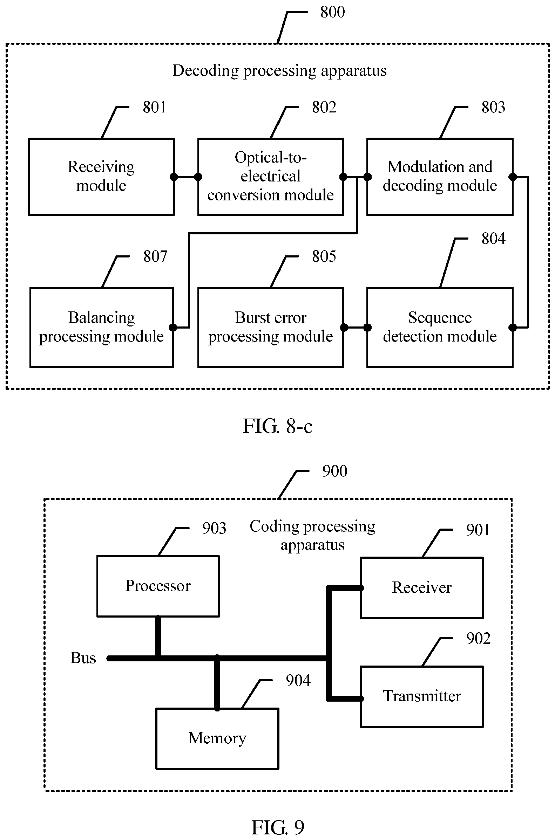

FIG. 8-a is a schematic structural diagram of composition of a decoding processing apparatus according to an embodiment of the present invention;
FIG. 8-b is a schematic structural diagram of composition of another decoding processing apparatus according to an embodiment of the present invention;
FIG. 8-c is a schematic structural diagram of composition of another decoding processing apparatus according to an embodiment of the present invention;
FIG. 9 is a schematic structural diagram of composition of another decoding processing apparatus according to an embodiment of the present invention; and

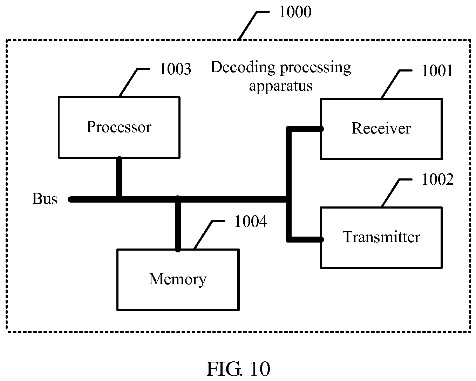

FIG. 10 is a schematic structural diagram of composition of another decoding processing apparatus according to an embodiment of the present invention.

### DESCRIPTION OF EMBODIMENTS

Embodiments of the present invention provide a method for compensating a bit error after forward error correction, a coding processing apparatus, and a decoding processing apparatus, to reduce bit error analysis time required after forward error correction, and implement precise adjustment of power of an optical module.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person skilled in the art based on the embodiments of the present invention shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of the present invention. In addition, the terms "include", "have" and any other variants mean to cover the non-exclusive inclusion, so that a process, a method, a system, a product, or a device that includes a series of units is not necessarily limited to those units, but may include other units not clearly listed or inherent to the process, the method, the system, the product, or the device.

Details are separately described in the following.

An embodiment of a method for compensating a bit error after forward error correction in the present invention may be applied to improve bit error performance after forward error correction is performed on a data stream. First, a method for compensating a bit error after forward error correction provided in an embodiment of the present invention is described on a coding processing apparatus side. Referring to FIG. 2, the method for compensating a bit error after forward error correction includes the following steps.

201. A coding processing apparatus performs forward error correction coding on a first data stream, so as to obtain a second data stream, where the first data stream is received from a parallel-serial and serial-parallel converter (Serdes).

In this embodiment of the present invention, the coding processing apparatus is connected to the Serdes. First, the Serdes performs clock recovery and rate allocation processing on input binary data, so as to obtain the first data stream. Then, the Serdes sends the first data stream to the coding processing apparatus. The coding processing apparatus provided in this embodiment of the present invention first receives the first data stream from the Serdes. To lower a bit error rate of a system and reduce a risk of a burst error, in this embodiment of the present invention, the coding processing apparatus first performs FEC coding on the first data stream. To distinguish data streams obtained in different processing phases, "first", "second", and so on are used in this embodiment of the present invention to distinguish the data streams in the different processing phases. For example, a data stream obtained after the coding processing apparatus performs FEC coding on the first data stream is defined as "the second data stream", where the second data stream is a data stream obtained after the coding processing apparatus performs FEC coding on the first data stream. To evaluate a capability of correcting a burst error by using FEC, step 202 is performed.

It should be noted that, in the foregoing embodiment of the present invention, when performing FEC coding on the first data stream, the coding processing apparatus may specifically use an FEC coding module built in the coding processing apparatus to complete FEC coding of the first data stream.

202. The coding processing apparatus inserts a preset channel monitoring training sequence into the second data stream, so as to obtain a third data stream, where the channel monitoring training sequence carries a preset sequence identifier.

In this embodiment of the present invention, to evaluate the capability of correcting a burst error by using FEC, after the coding processing apparatus generates the second data stream, to reduce bit-error analysis time required after forward error correction, the coding processing apparatus uses a bit error testing method that is totally different from that in the prior art. The coding processing apparatus may pre-configure a channel monitoring training sequence. The channel monitoring training sequence may be used to estimate a channel bit error characteristic, and the channel monitoring training sequence carries the preset sequence identifier, so that a decoding processing apparatus can detect the channel monitoring training sequence according to the sequence identifier. The coding processing apparatus may insert the channel monitoring training sequence into the second data stream. For ease of description, in this embodiment of the present invention, the second data stream into which the channel monitoring training sequence is inserted is defined as "the third data stream". Specifically, the channel monitoring training sequence may be regularly added to the second data stream, that is, the channel monitoring training sequence may be inserted into the second data stream at a preset time interval, so that the decoding processing apparatus can detect the channel monitoring training sequence according to the sequence identifier. The decoding processing apparatus may perform burst error statistics collection on the inserted channel monitoring training sequence, so as to analyze a channel noise characteristic and determine a bit error characteristic after correction.

In some embodiments of the present invention, step 202 in which the coding processing apparatus inserts a preset channel monitoring training sequence into the second data stream, so as to obtain a third data stream includes:
A1. The coding processing apparatus inserts the preset channel monitoring training sequence into a tail of the second data stream, so as to obtain the third data stream, where the third data stream includes: the second data stream and the channel monitoring training sequence inserted into the tail of the second data stream.

In the foregoing embodiment of the present invention, the coding processing apparatus may specifically insert the channel monitoring training sequence into the tail of the second data stream, so as to obtain the third data stream. Therefore, the obtained third data stream may include the second data stream and the channel monitoring training sequence inserted into the tail of the second data stream. The channel monitoring training sequence may be specifically a binary character string such as 0111000111. There may be multiple specific implementations, and this is not limited herein.

203. The coding processing apparatus performs modulation and coding processing on the third data stream, so as to obtain a fourth data stream.

In this embodiment of the present invention, after the coding processing apparatus obtains the third data stream, before the coding processing apparatus sends, to the decoding processing apparatus by using an optical fiber, the third data stream into which the channel monitoring training sequence is inserted, the coding processing apparatus performs modulation and coding processing on the third data stream, that is, the third data stream may be output in a modulated code type.

204. The coding processing apparatus performs electrical-to-optical conversion processing on the fourth data stream, so as to obtain a fifth data stream.

In this embodiment of the present invention, after obtaining the fourth data stream, the coding processing apparatus may further convert an electrical signal of the fourth data stream into an optical signal. For ease of description, in this embodiment of the present invention, the fourth data stream on which electrical-to-optical conversion processing is performed is defined as "the fifth data stream", and the fifth data stream is an optical signal. Step 205 may be performed in the following. Specifically, in this embodiment of the present invention, the coding processing apparatus may configure a transmitter to complete electrical-to-optical conversion processing of the fourth data stream.

205. The coding processing apparatus sends the fifth data stream to a decoding processing apparatus by using an optical signal transmission medium.

In this embodiment of the present invention, an optical signal transmission medium (Fiber) is configured between the coding processing apparatus and the decoding processing apparatus. After the coding processing apparatus obtains the fifth data stream, the coding processing apparatus may send the fifth data stream to the decoding processing apparatus by using the optical signal transmission medium, so that the decoding processing apparatus can receive, by using the optical signal transmission medium, the fifth data stream sent by the coding processing apparatus. For details, refer to a description of the decoding processing apparatus in the subsequent embodiment.

In some embodiments of the present invention, after step 204 in which the coding processing apparatus performs electrical-to-optical conversion processing on the fourth data stream, so as to obtain a fifth data stream, the method for compensating a bit error after forward error correction provided in this embodiment of the present invention may further include the following step:
B1. The coding processing apparatus performs optical multiplexing processing on the fifth data stream, so as to obtain the fifth data stream on which optical multiplexing is performed.

In the foregoing embodiment of the present invention, if the fifth data stream includes optical signals of transmitters with different wavelengths, the optical multiplexing processing of the fifth data stream may be completed by using an optical multiplexing module in the coding processing apparatus, so that the optical signals of transmitters with different wavelengths can be multiplexed into a same channel.

In an implementation scenario in which step B1 is further performed in this embodiment of the present invention, step 205 in which the coding processing apparatus sends the fifth data stream to a decoding processing apparatus by using an optical signal transmission medium may specifically include the following step:
C1. The coding processing apparatus sends the fifth data stream on which optical multiplexing is performed to the decoding processing apparatus by using the optical signal transmission medium.

Specifically, if optical multiplexing processing is performed on the fifth data stream, the data stream transmitted by the coding processing apparatus by using the optical signal transmission medium is the fifth data stream on which optical multiplexing is performed.

In some other embodiments of the present invention, after step 203 in which the coding processing apparatus performs modulation and coding processing on the third data stream, so as to obtain a fourth data stream, the method for compensating a bit error after forward error correction provided in this embodiment of the present invention may further include the following step:
D1. The coding processing apparatus performs pre-amplification processing on a high frequency component in the fourth data stream, so as to obtain the fourth data stream on which pre-amplification is performed.

In the foregoing embodiment of the present invention, to compensate following insufficient bandwidth, the coding processing apparatus may further perform pre-amplification processing on the high frequency component of the fourth data stream. For example, for a general transmission channel, attenuation of a high frequency component is larger than that of a low frequency component. To compensate this loss, a high frequency part of a signal at a transmit end is pre-amplified, or the pre-amplification process may be referred to as pre-emphasis processing.

In an implementation scenario in which step D1 is further performed in this embodiment of the present invention, step 204 in which the coding processing apparatus performs electrical-to-optical conversion processing on the fourth data stream, so as to obtain a fifth data stream may specifically include the following step:
E1. The coding processing apparatus performs electrical-to-optical conversion processing on the fourth data stream on which pre-amplification is performed, so as to obtain the fifth data stream.

Specifically, if pre-amplification processing is further performed on the fourth data stream, the coding processing apparatus may perform electrical-to-optical conversion processing on the fourth data stream on which pre-amplification is performed, so as to obtain the fifth data stream.

Further, in some embodiments of the present invention, in an implementation scenario of the foregoing step D1, after step D1 in which the coding processing apparatus performs pre-amplification processing on a high frequency component in the fourth data stream, so as to obtain the fourth data stream on which pre-amplification is performed, the method for compensating a bit error after forward error correction provided in this embodiment of the present invention may further include the following step:
F1. The coding processing apparatus performs signal amplitude amplification processing on the fourth data stream on which pre-amplification is performed, so as to obtain the fourth data stream whose signal amplitude is amplified.

The coding processing apparatus may further configure a driver to perform signal amplitude amplification processing on the fourth data stream, so that the fourth data stream can be converted into an electrical signal that can drive a transmitter.

In an implementation scenario in which step F1 is further performed in this embodiment of the present invention, step 204 in which the coding processing apparatus performs electrical-to-optical conversion processing on the fourth data stream, so as to obtain a fifth data stream may specifically include the following step:
G1. The coding processing apparatus performs electrical-to-optical conversion processing on the fourth data stream whose signal amplitude is amplified, so as to obtain the fifth data stream.

Specifically, if signal amplitude amplification processing is further performed on the fourth data stream, the coding processing apparatus may perform electrical-to-optical conversion processing on the fourth data stream whose signal amplitude is amplified, so as to obtain the fifth data stream.

It may be learned from the description of examples of the present invention in the foregoing embodiment that, a coding processing apparatus first performs FEC coding on a first data stream, so as to obtain a second data stream. The coding processing apparatus inserts a preset channel monitoring training sequence into the second data stream, so as to obtain a third data stream, where the channel monitoring training sequence carries a preset sequence identifier. The coding processing apparatus performs modulation and coding processing on the third data stream, so as to obtain a fourth data stream. The coding processing apparatus performs electrical-to-optical conversion processing on the fourth data stream, so as to obtain a fifth data stream. The coding processing apparatus sends the fifth data stream to a decoding processing apparatus by using an optical signal transmission medium. In this embodiment of the present invention, because the coding processing apparatus inserts the channel monitoring training sequence into a data stream of a transmit end, where the channel monitoring training sequence may be used to estimate a channel bit error characteristic, the decoding processing apparatus can detect the channel monitoring training sequence in a received data stream according to a sequence identifier. In this embodiment of the present invention, a long-term bit error test is not needed, and a burst error rate after forward error correction may be accurately predicted by detecting the channel monitoring training sequence. Therefore, bit error analysis time required after forward error correction is greatly reduced, and precise adjustment of power of an optical module is also implemented.

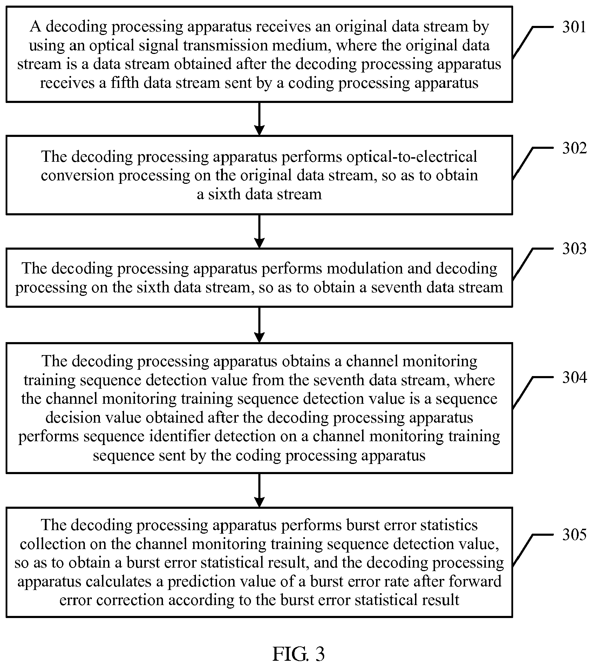

In the foregoing embodiment, the method for compensating a bit error after forward error correction provided in the embodiments of the present invention is described on a coding processing apparatus side. The method for compensating a bit error after forward error correction provided in the embodiments of the present invention is continuously described on a decoding processing apparatus side in the following. A data stream is transmitted between the decoding processing apparatus and the coding processing apparatus by using an optical signal transmission medium. Referring to FIG. 3, a method for compensating a bit error after forward error correction provided in an embodiment of the present invention includes the following steps.

301. A decoding processing apparatus receives an original data stream by using an optical signal transmission medium, where the original data stream is a data stream obtained after the decoding processing apparatus receives a fifth data stream sent by a coding processing apparatus.

In this embodiment of the present invention, an optical signal transmission medium is configured between the coding processing apparatus and the decoding processing apparatus. The coding processing apparatus may send the fifth data stream to the decoding processing apparatus by using the optical signal transmission medium. The decoding processing apparatus may receive, by using the optical signal transmission medium, the fifth data stream sent by the coding processing apparatus. The fifth data stream received by the decoding processing apparatus from the coding processing apparatus is referred to as "the original data stream".

302. The decoding processing apparatus performs optical-to-electrical conversion processing on the original data stream, so as to obtain a sixth data stream.

In this embodiment of the present invention, after the decoding processing apparatus receives the original data stream by using the optical signal transmission medium, because an optical signal is transmitted by using the optical signal transmission medium, the decoding processing apparatus first needs to perform optical-to-electrical conversion processing on the original data stream, so as to obtain the sixth data stream. It should be noted that, in this embodiment of the present invention, to distinguish data streams obtained in different processing phases, "first", "second", and so on are used in this embodiment of the present invention to distinguish the data streams in the different processing phases. For the decoding processing apparatus, a data stream obtained after optical-to-electrical conversion processing is performed on the original data stream is defined as "the sixth data stream". There is no timing or logical sequence relationship between "the sixth data stream", "a seventh data stream", and "the fifth data stream" in this embodiment of the present invention.

In some embodiments of the present invention, after step 301 in which a decoding processing apparatus receives an original data stream by using an optical signal transmission medium, the method for compensating a bit error after forward error correction provided in this embodiment of the present invention may further include the following step:
HI. The decoding processing apparatus performs optical demultiplexing processing on the received original data stream, so as to obtain the original data stream on which optical demultiplexing is performed.

In the foregoing embodiment of the present invention, if the coding processing apparatus performs optical multiplexing processing on a data stream of a transmit end, so that optical signals of transmitters with different wavelengths may be multiplexed into a same channel. The decoding processing apparatus may perform optical demultiplexing processing on the original data stream, so that the signals with different wavelengths in the same optical fiber channel are demultiplexed and then allocated to different receive channels.

In an implementation scenario in which step HI is further performed in this embodiment of the present invention, step 302 in which the decoding processing apparatus performs optical-to-electrical conversion processing on the original data stream, so as to obtain a sixth data stream includes the following step:
I1. The decoding processing apparatus performs optical-to-electrical conversion processing on the original data stream on which optical demultiplexing is performed, so as to obtain the sixth data stream.

Specifically, if optical demultiplexing processing is further performed on the original data stream, the decoding processing apparatus may perform optical-to-electrical conversion processing on the original data stream on which optical demultiplexing is performed.

303. The decoding processing apparatus performs modulation and decoding processing on the sixth data stream, so as to obtain a seventh data stream.

In this embodiment of the present invention, the coding processing apparatus performs modulation and coding on the data stream of the transmit end. Correspondingly, the decoding processing apparatus may perform modulation and decoding processing on the sixth data stream according to a decoding rule corresponding to a coding rule of modulation and coding, so as to obtain the seventh data stream.

In some embodiments of the present invention, after step 302 in which the decoding processing apparatus performs optical-to-electrical conversion processing on the original data stream, so as to obtain a sixth data stream, the method for compensating a bit error after forward error correction provided in this embodiment of the present invention may further include the following step:
J1. The decoding processing apparatus performs signal balancing processing on the sixth data stream, so as to obtain the sixth data stream on which signal balancing is performed.

Specifically, in the foregoing embodiment of the present invention, to mitigate intersymbol interference (ISI) impact, the decoding processing apparatus may further perform signal balancing processing on the sixth data stream, so as to obtain the sixth data stream on which signal balancing is performed.

In an implementation scenario in which step J1 is further performed in this embodiment of the present invention, step 303 in which the decoding processing apparatus performs modulation and decoding processing on the sixth data stream, so as to obtain a seventh data stream includes the following step:
K1. The decoding processing apparatus performs modulation and decoding processing on the sixth data stream on which signal balancing is performed, so as to obtain the seventh data stream.

Specifically, if signal balancing processing is further performed on the data stream of the transmit end, the decoding processing apparatus may perform modulation and decoding processing on the sixth data stream on which signal balancing is performed, so as to obtain the seventh data stream.

304. The decoding processing apparatus obtains a channel monitoring training sequence detection value from the seventh data stream, where the channel monitoring training sequence detection value is a sequence decision value obtained after the decoding processing apparatus performs sequence identifier detection on a channel monitoring training sequence sent by the coding processing apparatus.

It may be learned from the foregoing description of the coding processing apparatus that, the coding processing apparatus inserts the channel monitoring training sequence into the data stream of the transmit end. In this embodiment of the present invention, after the decoding processing apparatus obtains the seventh data stream, the decoding processing apparatus performs decision on a signal in the seventh data stream, so as to obtain the channel monitoring training sequence detection value from the seventh data stream. The channel monitoring training sequence detection value is a sequence decision value obtained after the decoding processing apparatus performs sequence identifier detection on the channel monitoring training sequence sent by the coding processing apparatus.

In some embodiments of the present invention, step 304 in which the decoding processing apparatus obtains a channel monitoring training sequence detection value from the seventh data stream includes the following step:
L1. The decoding processing apparatus detects a sequence identifier in the seventh data stream, and when the sequence identifier is detected in the seventh data stream, obtains the channel monitoring training sequence detection value in the seventh data stream from the sequence identifier to a tail of the seventh data stream.

In the foregoing embodiment of the present invention, the coding processing apparatus may specifically insert the channel monitoring training sequence into a tail of the data stream of the transmit end. Therefore, when the decoding processing apparatus detects the sequence identifier in the seventh data stream, and when the sequence identifier is detected in the seventh data stream, the decoding processing apparatus obtains the channel monitoring training sequence detection value in the seventh data stream from the sequence identifier to the tail of the seventh data stream.

305. The decoding processing apparatus performs burst error statistics collection on the channel monitoring training sequence detection value, so as to obtain a burst error statistical result, and the decoding processing apparatus calculates a prediction value of a burst error rate after forward error correction according to the burst error statistical result.

In this embodiment of the present invention, the channel monitoring training sequence is a training sequence used for channel monitoring. Both the coding processing apparatus and the decoding processing apparatus may obtain the channel monitoring training sequence. After obtaining the channel monitoring training sequence detection value, by comparing the original channel monitoring training sequence with the channel monitoring training sequence detection value, the decoding processing apparatus completes burst error statistics collection on the channel monitoring training sequence detection value, so as to obtain the burst error statistical result. The decoding processing apparatus calculates the prediction value of a burst error rate after forward error correction according to the burst error statistical result. The prediction value of a burst error rate indicates a burst error rate that may be generated after forward error correction is performed at the transmit end, and the prediction value of a burst error rate is a basis for compensating a signal. Therefore, precise compensation for a burst error may be implemented in this embodiment of the present invention.

In some embodiments of the present invention, step 305 in which the decoding processing apparatus calculates a prediction value of a burst error rate after forward error correction according to the burst error statistical result includes:
M1. The decoding processing apparatus obtains, according to the burst error statistical result, at least two lengths of consecutive burst errors and a time interval at which each length of consecutive burst errors is generated in the channel monitoring training sequence detection value; and
M2. Perform first order linear fitting according to the lengths of consecutive burst errors and the time intervals, and calculate the prediction value of a burst error rate after forward error correction according to a first order linear fitting relationship.

In the foregoing embodiment of the present invention, the decoding processing apparatus may calculate the prediction value of a burst bit error rate in a first order linear fitting manner. First, statistics about at least two lengths of consecutive burst errors and a time interval at which each length of consecutive burst errors is generated in the channel monitoring training sequence detection value are collected. For example, statistics about three lengths of consecutive burst errors may be collected, and a time interval at which each length is generated is calculated. First order linear fitting is performed according to the lengths of consecutive burst errors and the time intervals, so that a first order linear function between a time interval and a length of consecutive burst errors can be calculated, and the prediction value of a burst error rate after forward error correction is calculated according to the first order linear function.

In some embodiments of the present invention, after step 305 in which the decoding processing apparatus calculates a prediction value of a burst error rate after forward error correction according to the burst error statistical result, the method for compensating a bit error after forward error correction provided in this embodiment of the present invention may further include the following step:
N1. The decoding processing apparatus calculates a numerical relationship between the prediction value of a burst error rate after forward error correction and a preset bit error threshold after forward error correction, and outputs a numerical calculation result to a microprocessor, so that the microprocessor adjusts power of the coding processing apparatus and/or the decoding processing apparatus according to the numerical calculation result.

In the foregoing embodiment of the present invention, the decoding processing apparatus presets a bit error threshold after forward error correction, and according to the prediction value of a burst error rate after forward error correction that is calculated in step 305, determines whether the prediction value of a burst error rate is greater than the bit error threshold after forward error correction, calculates a numerical proportional relationship between the prediction value of a burst error rate and the bit error threshold after forward error correction, and outputs a numerical calculation result to a microprocessor. The microprocessor adjusts power of the coding processing apparatus and/or the decoding processing apparatus according to the numerical calculation result. Selection of the bit error threshold after forward error correction is related to a specific application scenario.

It may be learned from the description of examples of the present invention in the foregoing embodiment that, a decoding processing apparatus first receives an original data stream by using an optical signal transmission medium. The decoding processing apparatus performs optical-to-electrical conversion processing on the original data stream, so as to obtain a sixth data stream. The decoding processing apparatus performs modulation and decoding processing on the sixth data stream, so as to obtain a seventh data stream. The decoding processing apparatus obtains a channel monitoring training sequence detection value from the seventh data stream, where the channel monitoring training sequence detection value is a sequence decision value obtained after the decoding processing apparatus performs sequence identifier detection on a channel monitoring training sequence sent by a coding processing apparatus. The decoding processing apparatus performs burst error statistics collection on the channel monitoring training sequence detection value, so as to obtain a burst error statistical result, and the decoding processing apparatus calculates a prediction value of a burst error rate after forward error correction according to the burst error statistical result. In this embodiment of the present invention, because the coding processing apparatus inserts the channel monitoring training sequence into a data stream of a transmit end, where the channel monitoring training sequence may be used to estimate a channel bit error characteristic, the decoding processing apparatus can detect the channel monitoring training sequence in a received data stream according to a sequence identifier. In this embodiment of the present invention, a long-term bit error test is not needed, and a burst error rate after forward error correction may be accurately predicted by detecting the channel monitoring training sequence. Therefore, bit error analysis time required after forward error correction is greatly reduced, and precise adjustment of power of an optical module is also implemented.

For better understanding and implementing the foregoing solutions of the embodiments of the present invention, the following uses a corresponding application scenario as an example for specific description. In this embodiment of the present invention, a mechanism of monitoring and compensating a bit error in a Gaussian channel after correction that is proposed for a high order modulation manner is used as an example for description in the following, so as to improve development efficiency and stability of an optical module, and implement system working optimization. Specifically, bit error analysis time required after correction may be shortened, and testing time and development time of a module may be greatly reduced in this embodiment of the present invention. Because of accurate calculation of a channel characteristic algorithm provided in this embodiment of the present invention, a module working status is precisely adjusted. Therefore, a device and a system may be optimally matched, and budget of a system link may be optimized.

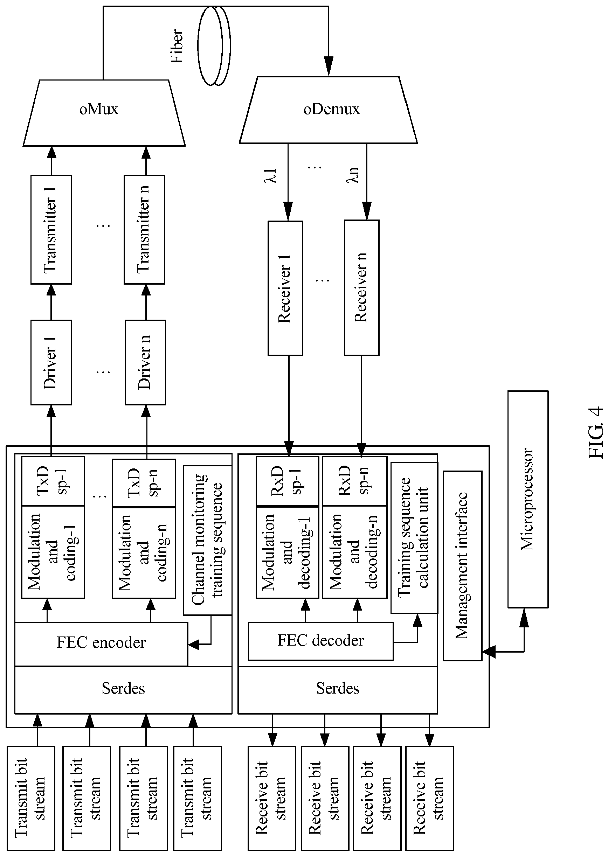

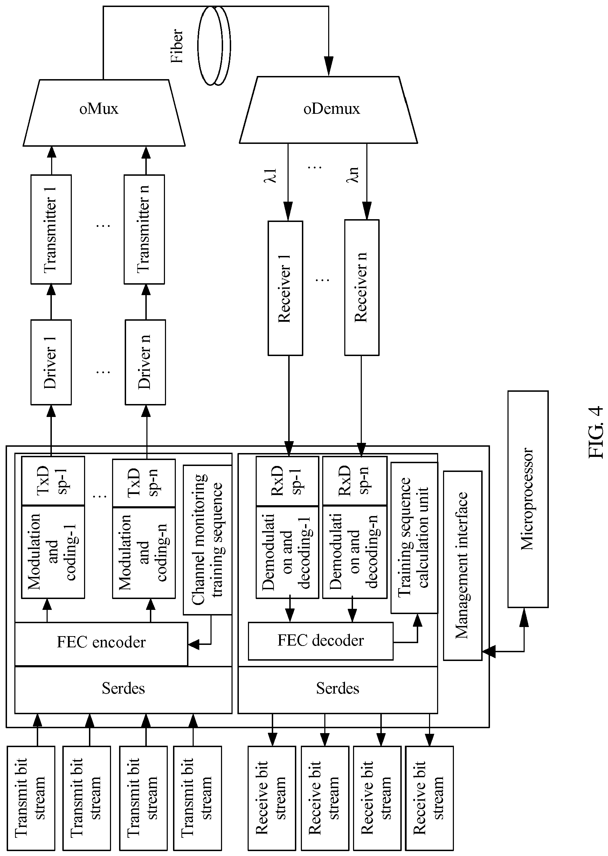

Referring to FIG. 4, FIG. 4 is a schematic architectural diagram of an application system of a method for compensating a bit error after forward error correction according to an embodiment of the present invention. FIG. 4 is a schematic diagram of a system for monitoring and compensating a bit error after correction. This embodiment of the present invention proposes a mechanism for monitoring and compensating a bit error after correction based on system channel characteristic analysis, and main modules and functions included in the mechanism are described as follows:

A transmit bit stream is binary data input from the outside. A Serdes is a serial-parallel conversion unit, and performs clock recovery and rate allocation on the input binary data. An FEC encoder is configured to implement forward error correction coding. Modulation and coding-1, ..., and modulation and coding-n are modulation and coding units that are configured to output the input binary data in a corresponding modulated code type. TxDSP-1, ..., and TxDSP-n are digital signal processing units at a transmit end. A channel monitoring training sequence is a channel bit error characteristic estimation sequence that is regularly added. A driver 1, ..., and a driver n are electrical signal amplitude amplification units. A transmitter 1, ..., and a transmitter n are electrical signal conversion units that are configured to convert an electrical signal output by the driver into a corresponding optical signal for outputting. oMux is an optical multiplexing unit that is configured to multiplex optical signals of transmitters with different wavelengths into a same channel. Fiber is an optical signal transmission medium. oDemux is an optical demultiplexing unit that is configured to demultiplex signals with different wavelengths in the same optical fiber channel and then allocate the signals to different receiving channels. A receiver is an optical signal conversion unit that is configured to convert the optical signal output by the oDemux into a corresponding electrical signal for outputting. RxDSP-1, ..., and RxDSP-n are digital signal processing units at a receive end that are configured to implement clock recovery and balancing processing of an electrical signal. Modulation and decoding-1, ..., and modulation and decoding-n are modulation and decoding units that are configured to perform decision on a signal output by the RxDSP, and decode, according to a previous coding relationship, the signal into corresponding binary data for outputting. A training sequence calculation unit is configured to evaluate a channel bit error characteristic. Bit error compensation after correction is to perform statistical analysis on a channel bit error, predict a long-term bit error characteristic of a system, and take a compensation measure. A forward error correction decoder is configured to perform FEC decoding on a data stream. A chip management interface is configured to connect a chip and an external processor. An external microprocessor is configured to: adjust a device such as a driver, a transmitter, or a receiver, and compensate and improve a bit error after correction.

In FIG. 4, the channel monitoring training sequence and a training sequence calculation unit are used to implement decision of a burst error, insertion of a channel monitoring training sequence at a transmit end, and processing and calculation of received data at a receive end. The channel monitoring training sequence is used to insert data used for monitoring (that is, a channel bit error characteristic estimation sequence) into data on which FEC coding is performed, then the data is used as channel monitoring data, and modulation and coding, and TxDSP preprocessing are performed on the data, where the preprocessing is driving pre-amplification of a high frequency component of a signal for compensating following insufficient bandwidth. Then, the data is transmitted by using an optical fiber link after electrical-to-optical conversion is performed on the data by a transmitter. After optical-to-electrical conversion by a receiver, RxDSP processing, and modulation and decoding are performed on the data at the receive end, the Training sequence Cal unit performs burst error statistics collection on the inserted monitoring sequence to implement analysis of a channel noise characteristic, and determines a bit error characteristic after correction, feeds back the bit error characteristic to the microprocessor to adjust a device at the transmit end or a device at the receive end, so as to implement steady working and optimal matching of links.

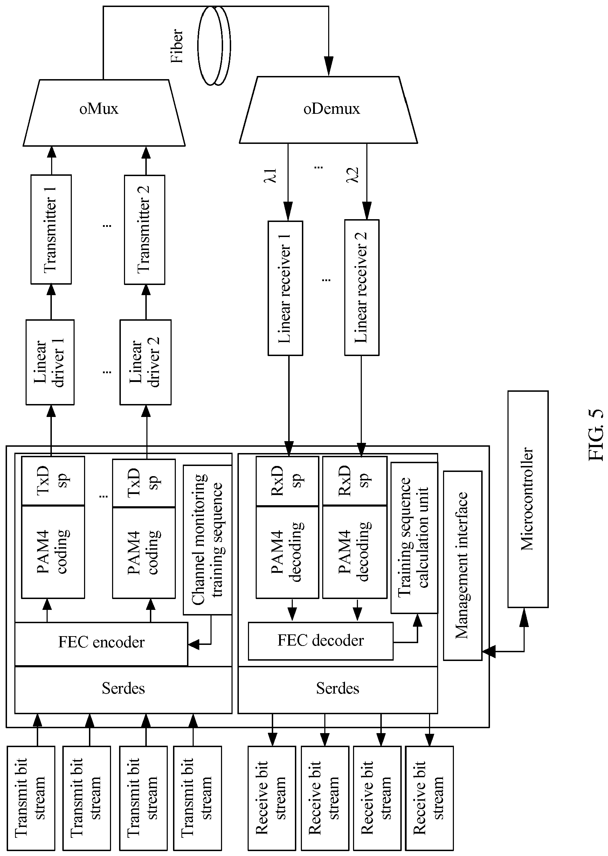

Referring to FIG. 5, FIG. 5 is a schematic architectural diagram of another application system of a method for compensating a bit error after forward error correction according to an embodiment of the present invention. In this embodiment of the present invention, a mechanism of monitoring and compensating a bit error in a Gaussian channel after correction that is proposed for a high order modulation manner such as PAM4 is used as an example for description in the following. FIG. 5 is a block diagram of a bit error monitoring system based on PAM4 modulation.

Clock data recovery and rate allocation are performed on a transmit bit stream whose total rate is 100 GE by using a Serdes, and then four NRZ signals with 25Gbps are output. An FEC Encoder performs forward error correction coding on the output signals. A Training Sequence unit regularly adds a binary bit with a length of N to data output by the FEC Encoder, and uses the binary bit as a monitoring sequence. A value of N may be obtained by multiplying a reciprocal of a bit error rate before correction by a value (10 or 100), so as to collect statistics about an occurring period of three consecutive bit errors. The FEC Encoder divides the data to which the monitoring sequence is added into four pieces of binary data for outputting. Every two binary signals are coded in a PAM4 coding manner shown in the following Table 1. TxDSP performs pre-emphasis processing on an analog PAM4 electrical signal. For a general transmission channel, attenuation of a high frequency component is larger than that of a low frequency component. To compensate this loss, a high frequency component of a signal at a transmit end is pre-amplified, or the pre-amplification process may be referred to as pre-emphasis. A linear driver performs linear amplification and offset addition on a voltage signal output by a front end of the driver, so that the voltage signal is converted into an electrical signal that can drive a transmitter. The offset addition is to add a direct current component to an alternating-current signal. Wavelengths of two signals transmitted by two transmitters are different, and the two signals are multiplexed into a same optical fiber by using oMux for transmission.

**Table 1 is a mapping table for a PAM4 coding unit**

| **PAM4 coding input bit pair** | | **PAM4 coding output** |
|---|---|---|
| 0 | 0 | 0 |
| 0 | 1 | 1 |
| 1 | 0 | 3 |
| 1 | 1 | 2 |

oDemux at a receive end demultiplexs two waves to different receivers. RxDSP performs balancing processing on a signal of the receiver to mitigate ISI impact. A PAM4 modulation and decoding unit performs decision on the signal, and divides one PAM4 signal into two NRZ signals according to reverse mapping of Table 1 for outputting. Two NRZ signals need to be input for each PAM4. A Training Sequence Cal unit performs bit error statistics collection on a sequence training part output after decision, and estimates a bit error after correction. An FEC Decoder performs forward error correction decoding on data from which a channel monitoring training sequence is removed. A Serdes processes the decoded data, and performs clock data conversion on the decoded data. The decoded data is converted into four binary bit streams and is output to an external circuit for processing.

Next, referring to FIG. 6, a calculation process of a Training Sequence Cal unit is as follows: A receive end obtains a channel monitoring training sequence from binary data that undergoes modulation and decoding. In the Training Sequence Cal unit, statistics collection is performed according to a quantity of consecutive bit errors. As shown in FIG. 6, a number in blocks with a same number represents a wrong bit error quantity, and an interval between the same blocks represents an interval at which a bit error occurs. t₁ represents a time interval at which one bit error occurs in the training sequence, t₂ represents a time interval at which two consecutive bit errors occur in the training sequence, and t₃ represents a time interval at which three consecutive bit errors occur in the training sequence. A bit interval between same bit error lengths is obtained by denoting a location at which a bit error occurs. If a bit rate, that is, a time interval of each bit is known, a time interval at which same bit error lengths occur may be obtained.

For example, during statistics collection about a burst error length shown in FIG. 6, first order linear fitting is performed on three points (1, log10(t₁)), (2, log10(t₂)), and (3, log10(t₃)) according to obtained t₁, t₂, and t₃, and a first order fitting relationship: log10(tₙ)=k^{∗}n+b between a length n of consecutive burst errors and a time interval tₙ may be obtained, where k and b are a slope and an intercept of a first order fitting term. A relationship between a burst error and a time interval is related to a bit error before correction of a system. A lower bit error before correction and a steeper slope indicate a longer time interval at which an uncorrectable burst error occurs, a steadier system, and larger receiving power needed by a receiver.

In this embodiment of the present invention, for a chip that has an FEC function in any system, there is an upper limit of a capability of correcting a burst error length. If the upper limit is N, and N is substituted in the foregoing formula, a time interval t_{N} at which this bit error length occurs may be obtained. A bit error after correction generated by this burst error in this interval may be obtained according to a transmission rate B of each transmitter of a system, that is, BN=N/(t_{N}^{∗}B). According to a requirement of a bit error after correction of the system, if the bit error after correction of the system is B0, a bit error that is less than the bit error after correction of the system by two orders of magnitude is a secure working threshold:
(1). If BN<B0/100, and a bit error after correction is lower than the bit error after correction that is required by the system by two orders of magnitude, it is determined that this system works safely in a long term, and the system needs no adjustment and works normally.
(2). If BN>B0/100, a long-term working security risk exists in the system, and receiving optical power needs to be increased. It is assumed that a power adjustment step is ΔP. Each time power ΔP is added at a transmit end, sending of a training sequence and a calculation process are repeated, and determining of steps (1) and (2) is performed until the system meets a condition of step (1). When a quantity of power increasing times is greater than m (generally, m=3), and the system still cannot meet the condition BN<B0/100, it is determined that a long-term working security risk exists in the system, and a module gives an alarm instruction for recovery and rectification.

In this embodiment of the present invention, a bit error characteristic after correction of a module may be accurately evaluated, and development time and development costs of the module are reduced. For example, in the foregoing example, after actual verification, if a requirement of a bit error after correction is B0=1e-12, an uncorrectable bit error length N=10, and B0/100=1e-14, monitoring time of only 32 µs is needed in verification to predetermine a bit error characteristic after correction. A time interval at which an uncorrectable bit error length occurs in the module is 4000s. Therefore, a real bit error after correction obtained by means of verification is 5e-14 that is slightly higher than 1e-14. Reducing power by 0.5 dB can enable the time interval at which the uncorrectable bit error length occurs to be greater than 5000s, and a secure working threshold of the system may be met. Therefore, testing time and determining time of the module is greatly reduced, and working efficiency is improved. Different devices are screened according to working features of the devices to adapt different scenarios, so as to improve a qualification ratio of devices, and reduce module costs.

In this embodiment of the present invention, a channel noise status is monitored in real time, and a high order modulation technology, including PAM4 or another high order modulation technology, is added. A training sequence is inserted in real time, and a channel monitoring training sequence is regularly inserted into a chip without changing transmission payload, so that channel degradation caused by various burst noises brought by a feature such as a system jitter, device aging, a dirty connector may be monitored. A bit error after correction is monitored and compensated by means of power adjustment, information output monitoring, and the like, so that long-term working security of the system can be improved. The method provided in the present invention may also be used for bit error estimation and compensation after correction in a common NRZ and another high order modulation scheme, or may be used for optimization of a method for testing module reliability in a commercially used meter. Long-term working performance of a module is accurately determined in a relatively short time, so that testing efficiency is greatly improved and a risk that the module becomes invalid on line is reduced.

It should be noted that, for ease of description in the foregoing method embodiments, the method is described as a series of actions. A person skilled in the art should understand that the actions in the present invention are not limited by the sequence described herein because some steps may occur in other sequence or occur simultaneously according to the present invention. In addition, a person skilled in the art should also understand that all the embodiments described in this specification belong to examples, and the actions and modules are not necessarily mandatory to the present invention.

For better implementing the foregoing solutions of the embodiments of the present invention, the following further provides related apparatuses for implementing the foregoing solutions.

Referring to FIG. 7-a, a coding processing apparatus 700 provided in this embodiment of the present invention may include: a forward error correction coding module 701, a sequence insertion module 702, a modulation and coding module 703, an electrical-to-optical conversion module 704, and a sending module 705.

The forward error correction coding module 701 is configured to perform forward error correction FEC coding on a first data stream, so as to obtain a second data stream, where the first data stream is received from a parallel-serial and serial-parallel converter Serdes.

The sequence insertion module 702 is configured to insert a preset channel monitoring training sequence into the second data stream, so as to obtain a third data stream, where the channel monitoring training sequence carries a preset sequence identifier.

The modulation and coding module 703 is configured to perform modulation and coding processing on the third data stream, so as to obtain a fourth data stream.

The electrical-to-optical conversion module 704 is configured to perform electrical-to-optical conversion processing on the fourth data stream, so as to obtain a fifth data stream.

The sending module 705 is configured to send the fifth data stream to a decoding processing apparatus by using an optical signal transmission medium.

In some embodiments of the present invention, the sequence insertion module 702 is specifically configured to insert the preset channel monitoring training sequence into a tail of the second data stream, so as to obtain the third data stream, where the third data stream includes: the second data stream and the channel monitoring training sequence inserted into the tail of the second data stream.

In some embodiments of the present invention, referring to FIG. 7-b, the coding processing apparatus 700 further includes: an optical multiplexing module 706, configured to: after the electrical-to-optical conversion module 704 performs electrical-to-optical conversion processing on the fourth data stream, so as to obtain the fifth data stream, perform optical multiplexing processing on the fifth data stream, so as to obtain the fifth data stream on which optical multiplexing is performed.

The sending module 705 is specifically configured to send the fifth data stream on which optical multiplexing is performed to the decoding processing apparatus by using the optical signal transmission medium.

In some embodiments of the present invention, referring to FIG. 7-c, the coding processing apparatus 700 further includes: an amplification processing module 707, configured to: after the modulation and coding module 703 performs modulation and coding processing on the third data stream, so as to obtain the fourth data stream, perform pre-amplification processing on a high frequency component in the fourth data stream, so as to obtain the fourth data stream on which pre-amplification is performed.

The electrical-to-optical conversion module 704 is specifically configured to perform electrical-to-optical conversion processing on the fourth data stream on which pre-amplification is performed, so as to obtain the fifth data stream.

In some embodiments of the present invention, referring to FIG. 7-b, the amplification processing module 707 is further configured to: after performing pre-amplification processing on the high frequency component in the fourth data stream, so as to obtain the fourth data stream on which pre-amplification is performed, perform signal amplitude amplification processing on the fourth data stream on which pre-amplification is performed, so as to obtain the fourth data stream whose signal amplitude is amplified.

The electrical-to-optical conversion module 704 is specifically configured to perform electrical-to-optical conversion processing on the fourth data stream whose signal amplitude is amplified, so as to obtain the fifth data stream.

It may be learned from the description of examples of the present invention in the foregoing embodiment that, a coding processing apparatus first performs FEC coding on a first data stream, so as to obtain a second data stream. The coding processing apparatus inserts a preset channel monitoring training sequence into the second data stream, so as to obtain a third data stream, where the channel monitoring training sequence carries a preset sequence identifier. The coding processing apparatus performs modulation and coding processing on the third data stream, so as to obtain a fourth data stream. The coding processing apparatus performs electrical-to-optical conversion processing on the fourth data stream, so as to obtain a fifth data stream. The coding processing apparatus sends the fifth data stream to a decoding processing apparatus by using an optical signal transmission medium. In this embodiment of the present invention, because the coding processing apparatus inserts the channel monitoring training sequence into a data stream of a transmit end, where the channel monitoring training sequence may be used to estimate a channel bit error characteristic, the decoding processing apparatus can detect the channel monitoring training sequence in a received data stream according to a sequence identifier. In this embodiment of the present invention, a long-term bit error test is not needed, and a burst error rate after forward error correction may be accurately predicted by detecting the channel monitoring training sequence. Therefore, bit error analysis time required after forward error correction is greatly reduced, and precise adjustment of power of an optical module is also implemented.

Referring to FIG. 8-a, a decoding processing apparatus 800 provided in this embodiment of the present invention may include a receiving module 801, an optical-to-electrical conversion module 802, a modulation and decoding module 803, a sequence detection module 804, and a burst error processing module 805.

The receiving module 801 is configured to receive an original data stream by using an optical signal transmission medium, where the original data stream is a data stream obtained after a fifth data stream sent by a coding processing apparatus is received.

The optical-to-electrical conversion module 802 is configured to perform optical-to-electrical conversion processing on the original data stream, so as to obtain a sixth data stream.

The modulation and decoding module 803 is configured to perform modulation and decoding processing on the sixth data stream, so as to obtain a seventh data stream.

The sequence detection module 804 is configured to obtain a channel monitoring training sequence detection value from the seventh data stream, where the channel monitoring training sequence detection value is a sequence decision value obtained after sequence identifier detection is performed on a channel monitoring training sequence sent by the coding processing apparatus.

The burst error processing module 805 is configured to: perform burst error statistics collection on the channel monitoring training sequence detection value, so as to obtain a burst error statistical result, and calculate a prediction value of a burst error rate after forward error correction according to the burst error statistical result.

In some embodiments of the present invention, the sequence detection module 804 is specifically configured to: detect a sequence identifier in the seventh data stream, and when the sequence identifier is detected in the seventh data stream, obtain the channel monitoring training sequence detection value in the seventh data stream from the sequence identifier to a tail of the seventh data stream.

In some embodiments of the present invention, referring to FIG. 8-b, the decoding processing apparatus 800 further includes an optical demultiplexing module 806, configured to: after the receiving module 801 receives the original data stream by using the optical signal transmission medium, perform optical demultiplexing processing on the received original data stream, so as to obtain the original data stream on which optical demultiplexing is performed.

The optical-to-electrical conversion module 802 is specifically configured to perform optical-to-electrical conversion processing on the original data stream on which optical demultiplexing is performed, so as to obtain the sixth data stream.

In some embodiments of the present invention, referring to FIG. 8-c, the decoding processing apparatus 800 further includes: a balancing processing module 807, configured to: after the optical-to-electrical conversion module 802 performs optical-to-electrical conversion processing on the original data stream, so as to obtain the sixth data stream, perform signal balancing processing on the sixth data stream, so as to obtain the sixth data stream on which signal balancing is performed.

The modulation and decoding module 803 is specifically configured to perform modulation and decoding processing on the sixth data stream on which signal balancing is performed, so as to obtain the seventh data stream.

In some embodiments of the present invention, the burst error processing module 805 is specifically configured to: obtain, according to the burst error statistical result, at least two lengths of consecutive burst errors and a time interval at which each length of consecutive burst errors is generated in the channel monitoring training sequence detection value; and perform first order linear fitting according to the lengths of consecutive burst errors and the time intervals, and calculate the prediction value of a burst error rate after forward error correction according to a first order linear fitting relationship.

In some embodiments of the present invention, the burst error processing module 805 is further configured to: after calculating the prediction value of a burst error rate after forward error correction according to the burst error statistical result, calculate a numerical relationship between the prediction value of a burst error rate after forward error correction and a preset bit error threshold after forward error correction, and output a numerical calculation result to a microprocessor, so that the microprocessor adjusts power of the coding processing apparatus and/or the decoding processing apparatus according to the numerical calculation result.

It may be learned from the description of examples of the present invention in the foregoing embodiment that, a decoding processing apparatus first receives an original data stream by using an optical signal transmission medium. The decoding processing apparatus performs optical-to-electrical conversion processing on the original data stream, so as to obtain a sixth data stream. The decoding processing apparatus performs modulation and decoding processing on the sixth data stream, so as to obtain a seventh data stream. The decoding processing apparatus obtains a channel monitoring training sequence detection value from the seventh data stream, where the channel monitoring training sequence detection value is a sequence decision value obtained after the decoding processing apparatus performs sequence identifier detection on a channel monitoring training sequence sent by a coding processing apparatus. The decoding processing apparatus performs burst error statistics collection on the channel monitoring training sequence detection value, so as to obtain a burst error statistical result, and the decoding processing apparatus calculates a prediction value of a burst error rate after forward error correction according to the burst error statistical result. In this embodiment of the present invention, because the coding processing apparatus inserts the channel monitoring training sequence into a data stream of a transmit end, where the channel monitoring training sequence may be used to estimate a channel bit error characteristic, the decoding processing apparatus can detect the channel monitoring training sequence in a received data stream according to a sequence identifier. In this embodiment of the present invention, a long-term bit error test is not needed, and a burst error rate after forward error correction may be accurately predicted by detecting the channel monitoring training sequence. Therefore, bit error analysis time required after forward error correction is greatly reduced, and precise adjustment of power of an optical module is also implemented.

It should be noted that content such as information exchange between the modules/units of the apparatus and the execution processes thereof is based on the same idea as the method embodiments of the present invention, and produces the same technical effects as the method embodiments of the present invention. For the specific content, reference may be made to the foregoing description in the method embodiments of the present invention, and details are not described herein again.

An embodiment of the present invention further provides a computer storage medium. The computer storage medium stores a program. The program includes all or a part of the steps described in the foregoing method embodiments.

The following describes another coding processing apparatus provided in an embodiment of the present invention. Referring to FIG. 9, a coding processing apparatus 900 includes:
a receiver 901, a transmitter 902, a processor 903, and a memory 904 (there may be one or more processors 903 in the coding processing apparatus 900, and one processor is used as an example in FIG. 9). In some embodiments of the present invention, the receiver 901, the transmitter 902, the processor 903, and the memory 904 may be connected by using a bus or in another manner, where the connection by using a bus is used as an example in FIG. 9.

The memory 904 may include a read-only memory and a random access memory, and provides an instruction and data for the processor 903. A part of the memory 904 may further include a non-volatile random access memory (NVRAM). The memory 904 stores an operating system and an operating instruction, and an executable module or a data structure, or subsets thereof, or extended sets thereof, where the operating instruction may include various operating instructions for implementing various operations. The operating system may include various system programs that are used to implement various basic services and process hardware-based tasks.

The processor 903 controls operation of the coding processing apparatus. The processor 903 may also be referred to as a central processing unit (CPU). In a specific application, all components of the coding processing apparatus are coupled together by using a bus system, where the bus system may further include a power supply bus, a control bus, a status signal bus, and the like in addition to a data bus. However, for clarity of description, various buses are marked as the bus system in the diagram.

The methods disclosed in the foregoing embodiments of the present invention may be applied to the processor 903, or implemented by the processor 903. The processor 903 may be an integrated circuit chip and has a signal processing capability. In an implementation process, steps in the foregoing methods may be completed by means of an integrated logic circuit of hardware in the processor 903 or an instruction in a form of software. The processor 903 may be a general purpose processor, a digital signal processor (DSP), an application-specific integrated circuit (ASIC), a field-programmable gate array (FPGA) or another programmable logic component, a discrete gate or a transistor logic component, or a discrete hardware component. The processor 903 may implement or execute methods, steps, and logic block diagrams that are disclosed in the embodiments of the present invention. The general purpose processor may be a microprocessor, or the processor may be any conventional processor. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the art, such as a random access memory, a flash memory, a read-only memory, a programmable read-only memory, an electrically erasable programmable memory, a register, or the like. The storage medium is located in the memory 904. The processor 903 reads information in the memory 904, and completes the steps of the foregoing method in combination with hardware of the memory 904.

The receiver 901 may be configured to: receive input digits or character information, and generate signal input that is related to related setting of the coding processing apparatus and function control. The transmitter 902 may include a display device such as a display screen. The transmitter 902 may be configured to output the digits or character information by using an external interface.

In this embodiment of the present invention, the processor 903 is specifically configured to perform the foregoing method for compensating a bit error after forward error correction that is performed by the coding processing apparatus shown in FIG. 2.

The following describes another decoding processing apparatus provided in an embodiment of the present invention. Referring to FIG. 10, a decoding processing apparatus 1000 includes:
a receiver 1001, a transmitter 1002, a processor 1003, and a memory 1004 (there may be one or more processors 1003 in the decoding processing apparatus 1000, and one processor is used as an example in FIG. 10). In some embodiments of the present invention, the receiver 1001, the transmitter 1002, the processor 1003, and the memory 1004 may be connected by using a bus or in another manner, where the connection by using a bus is used as an example in FIG. 10.

The memory 1004 may include a read-only memory and a random access memory, and provides an instruction and data for the processor 1003. A part of the memory 1004 may further include an NVRAM. The memory 1004 stores an operating system and an operating instruction, and an executable module or a data structure, or subsets thereof, or extended sets thereof, where the operating instruction may include various operating instructions for implementing various operations. The operating system may include various system programs that are used to implement various basic services and process hardware-based tasks.

The processor 1003 controls operations of the decoding processing apparatus, and the processor 1003 may also be referred to as a CPU. In a specific application, all components of the decoding processing apparatus are coupled together by using a bus system, where the bus system may further include a power supply bus, a control bus, a status signal bus, and the like in addition to a data bus. However, for clarity of description, various buses are marked as the bus system in the diagram.

The methods disclosed in the foregoing embodiments of the present invention may be applied to the processor 1003, or implemented by the processor 1003. The processor 1003 may be an integrated circuit chip and has a signal processing capability. In an implementation process, steps in the foregoing methods may be completed by means of an integrated logic circuit of hardware in the processor 1003 or an instruction in a form of software. The foregoing processor 1003 may be a general purpose processor, a DSP, an ASIC, an FPGA, or another programmable logic component, a discrete gate or a transistor logic component, or a discrete hardware component. The processor 1003 may implement or execute methods, steps, and logic block diagrams that are disclosed in the embodiments of the present invention. The general purpose processor may be a microprocessor, or the processor may be any conventional processor. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the art, such as a random access memory, a flash memory, a read-only memory, a programmable read-only memory, an electrically erasable programmable memory, a register, or the like. The storage medium is located in the memory 1004. The processor 1003 reads information in the memory 1004, and completes the steps of the foregoing method in combination with hardware of the memory 1004.

In this embodiment of the present invention, the processor 1003 is configured to perform the foregoing method for compensating a bit error after forward error correction that is performed by the decoding processing apparatus shown in FIG. 3.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementations, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM), a random access memory (RAM), a magnetic disk, or an optical disc of a computer, and includes several instructions for instructing a computer device (which may be a personal computer, a server, a network device, and the like) to perform the methods described in the embodiments of the present invention.

The foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method performed by a coding processing apparatus for compensating a bit error after forward error correction, comprising:
performing (201), by the coding processing apparatus, forward error correction, FEC, coding on a first data stream, so as to obtain a second data stream, wherein the first data stream is received from a parallel-serial and serial-parallel converter Serdes;
inserting (202), by the coding processing apparatus, a preset channel monitoring training sequence into a tail of the second data stream, so as to obtain a third data stream, wherein the third data stream comprises: the second data stream and the channel monitoring training sequence inserted into the tail of the second data stream, wherein the channel monitoring training sequence carries a preset sequence identifier;
performing (203), by the coding processing apparatus, modulation and coding processing on the third data stream, so as to obtain a fourth data stream;
performing (204), by the coding processing apparatus, electrical-to-optical conversion processing on the fourth data stream, so as to obtain a fifth data stream; and
sending (205), by the coding processing apparatus, the fifth data stream to a decoding processing apparatus by using an optical signal transmission medium.

2. The method according to claim 1, wherein after the performing (204), by the coding processing apparatus, electrical-to-optical conversion processing on the fourth data stream, so as to obtain a fifth data stream, the method further comprises:
performing, by the coding processing apparatus, optical multiplexing processing on the fifth data stream, so as to obtain the fifth data stream on which optical multiplexing is performed; and
the sending, by the coding processing apparatus, the fifth data stream to a decoding processing apparatus by using an optical signal transmission medium comprises:
sending, by the coding processing apparatus, the fifth data stream on which optical multiplexing is performed to the decoding processing apparatus by using the optical signal transmission medium.

3. The method according to claim 1, wherein after the performing (203), by the coding processing apparatus, modulation and coding processing on the third data stream, so as to obtain a fourth data stream, the method further comprises:
performing, by the coding processing apparatus, pre-amplification processing on a high frequency component in the fourth data stream, so as to obtain the fourth data stream on which pre-amplification is performed; and
the performing, by the coding processing apparatus, electrical-to-optical conversion processing on the fourth data stream, so as to obtain a fifth data stream comprises:
performing, by the coding processing apparatus, electrical-to-optical conversion processing on the fourth data stream on which pre-amplification is performed, so as to obtain the fifth data stream.

4. The method according to claim 3, wherein after the performing, by the coding processing apparatus, pre-amplification processing on a high frequency component in the fourth data stream, so as to obtain the fourth data stream on which pre-amplification is performed, the method further comprises:
performing, by the coding processing apparatus, signal amplitude amplification processing on the fourth data stream on which pre-amplification is performed, so as to obtain the fourth data stream whose signal amplitude is amplified; and
the performing, by the coding processing apparatus, electrical-to-optical conversion processing on the fourth data stream, so as to obtain a fifth data stream comprises:
performing, by the coding processing apparatus, electrical-to-optical conversion processing on the fourth data stream whose signal amplitude is amplified, so as to obtain the fifth data stream.

5. A method performed by a decoding processing apparatus for compensating a bit error after forward error correction, comprising:
receiving (301), by the decoding processing apparatus, an original data stream by using an optical signal transmission medium, wherein the original data stream is a data stream obtained after the decoding processing apparatus receives a fifth data stream sent by a coding processing apparatus;
performing (302), by the decoding processing apparatus, optical-to-electrical conversion processing on the original data stream, so as to obtain a sixth data stream;
performing (303), by the decoding processing apparatus, modulation and decoding processing on the sixth data stream, so as to obtain a seventh data stream;
obtaining (304), by the decoding processing apparatus, a channel monitoring training sequence detection value from the seventh data stream, wherein the channel monitoring training sequence detection value is a sequence decision value obtained after the decoding processing apparatus performs sequence identifier detection on a channel monitoring training sequence sent by the coding processing apparatus; and
performing (305), by the decoding processing apparatus, burst error statistics collection on the channel monitoring training sequence detection value, so as to obtain a burst error statistical result, and calculating, by the decoding processing apparatus, a prediction value of a burst error rate in a linear fitting manner after forward error correction according to the burst error statistical result;
calculating, by the decoding processing apparatus, a numerical relationship between the prediction value of a burst error rate after forward error correction and a preset bit error threshold after forward error correction, and outputting a numerical calculation result to a microprocessor, so that a microprocessor adjusts power of the coding processing apparatus and/or the decoding processing apparatus according to the numerical calculation result.

6. The method according to claim 5, wherein the obtaining (304), by the decoding processing apparatus, a channel monitoring training sequence detection value from the seventh data stream comprises:
detecting, by the decoding processing apparatus, a sequence identifier in the seventh data stream, and when the sequence identifier is detected in the seventh data stream, obtaining the channel monitoring training sequence detection value in the seventh data stream from the sequence identifier to a tail of the seventh data stream.

7. The method according to claim 5, wherein after the receiving (301), by a decoding processing apparatus, an original data stream by using an optical signal transmission medium, the method further comprises:
performing, by the decoding processing apparatus, optical demultiplexing processing on the received original data stream, so as to obtain the original data stream on which optical demultiplexing is performed; and
the performing, by the decoding processing apparatus, optical-to-electrical conversion processing on the original data stream, so as to obtain a sixth data stream comprises:
performing, by the decoding processing apparatus, optical-to-electrical conversion processing on the original data stream on which optical demultiplexing is performed, so as to obtain the sixth data stream.

8. The method according to claim 5, wherein after the performing (302), by the decoding processing apparatus, optical-to-electrical conversion processing on the original data stream, so as to obtain a sixth data stream, the method further comprises:
performing, by the decoding processing apparatus, signal balancing processing on the sixth data stream, so as to obtain the sixth data stream on which signal balancing is performed;
the performing, by the decoding processing apparatus, modulation and decoding processing on the sixth data stream, so as to obtain a seventh data stream comprises:
performing, by the decoding processing apparatus, modulation and decoding processing on the sixth data stream on which signal balancing is performed, so as to obtain the seventh data stream.

9. The method according to claim 5, wherein the calculating (305), by the decoding processing apparatus, a prediction value of a burst error rate after forward error correction according to the burst error statistical result comprises:
obtaining, by the decoding processing apparatus according to the burst error statistical result, at least two lengths of consecutive burst errors and a time interval at which each length of consecutive burst errors is generated in the channel monitoring training sequence detection value; and
performing first order linear fitting according to the lengths of consecutive burst errors and the time intervals, and calculating the prediction value of a burst error rate after forward error correction according to a first order linear fitting relationship.

10. A coding processing apparatus (700), comprising:
a forward error correction coding module (701), configured to perform forward error correction FEC coding on a first data stream, so as to obtain a second data stream, wherein the first data stream is received from a parallel-serial and serial-parallel converter Serdes;
a sequence insertion module (702), configured to insert a preset channel monitoring training sequence into a tail of the second data stream, so as to obtain a third data stream, and the third data stream comprises: the second data stream and the channel monitoring training sequence inserted into the tail of the second data stream, wherein the channel monitoring training sequence carries a preset sequence identifier;
a modulation and coding module (703), configured to perform modulation and coding processing on the third data stream, so as to obtain a fourth data stream;
an electrical-to-optical conversion module (704), configured to perform electrical-to-optical conversion processing on the fourth data stream, so as to obtain a fifth data stream; and
a sending module (705), configured to send the fifth data stream to a decoding processing apparatus by using an optical signal transmission medium.

11. The coding processing apparatus (700) according to claim 10, wherein the coding processing apparatus further comprises: an amplification processing module (707), configured to: after the modulation and coding module (703) performs modulation and coding processing on the third data stream, so as to obtain the fourth data stream, perform pre-amplification processing on a high frequency component in the fourth data stream, so as to obtain the fourth data stream on which pre-amplification is performed; and
the electrical-to-optical conversion module (704) is specifically configured to perform electrical-to-optical conversion processing on the fourth data stream on which pre-amplification is performed, so as to obtain the fifth data stream.

12. The coding processing apparatus (700) according to claim 11, wherein the amplification processing module (707) is further configured to: after performing pre-amplification processing on the high frequency component in the fourth data stream, so as to obtain the fourth data stream on which pre-amplification is performed, perform signal amplitude amplification processing on the fourth data stream on which pre-amplification is performed, so as to obtain the fourth data stream whose signal amplitude is amplified; and
the electrical-to-optical conversion module (704) is specifically configured to perform electrical-to-optical conversion processing on the fourth data stream whose signal amplitude is amplified, so as to obtain the fifth data stream.

13. A decoding processing apparatus (800), comprising:
a receiving module (801), configured to receive an original data stream by using an optical signal transmission medium, wherein the original data stream is a data stream obtained after a fifth data stream sent by a coding processing apparatus is received;
an optical-to-electrical conversion module (802), configured to perform optical-to-electrical conversion processing on the original data stream, so as to obtain a sixth data stream;
a modulation and decoding module (803), configured to perform modulation and decoding processing on the sixth data stream, so as to obtain a seventh data stream;
a sequence detection module (804), configured to obtain a channel monitoring training sequence detection value from the seventh data stream, wherein the channel monitoring training sequence detection value is a sequence decision value obtained after sequence identifier detection is performed on a channel monitoring training sequence sent by the coding processing apparatus; and
a burst error processing module (805), configured to perform burst error statistics collection on the channel monitoring training sequence detection value, so as to obtain a burst error statistical result, and calculate a prediction value of a burst error rate in a linear fitting manner after forward error correction according to the burst error statistical result;
the burst error processing module (805) is further configured to: after calculating the prediction value of a burst error rate after forward error correction according to the burst error statistical result, calculate a numerical relationship between the prediction value of a burst error rate after forward error correction and a preset bit error threshold after forward error correction, and output a numerical calculation result to a microprocessor, so that the microprocessor adjusts power of the coding processing apparatus and/or the decoding processing apparatus according to the numerical calculation result.

14. The decoding processing apparatus (800) according to claim 13, wherein the sequence detection module (804) is specifically configured to: detect a sequence identifier in the seventh data stream, and when the sequence identifier is detected in the seventh data stream, obtain the channel monitoring training sequence detection value in the seventh data stream from the sequence identifier to a tail of the seventh data stream.

15. The decoding processing apparatus (800) according to claim 13, wherein the decoding processing apparatus further comprises: an optical demultiplexing module (806), configured to: after the receiving module (801) receives the original data stream by using the optical signal transmission medium, perform optical demultiplexing processing on the received original data stream, so as to obtain the original data stream on which optical demultiplexing is performed; and
the optical-to-electrical conversion module (802) is specifically configured to perform optical-to-electrical conversion processing on the original data stream on which optical demultiplexing is performed, so as to obtain the sixth data stream.

16. The decoding processing apparatus (800) according to claim 13, wherein the burst error processing module (805) is specifically configured to: obtain, according to the burst error statistical result, at least two lengths of consecutive burst errors and a time interval at which each length of consecutive burst errors is generated in the channel monitoring training sequence detection value; and perform first order linear fitting according to the lengths of consecutive burst errors and the time intervals, and calculate the prediction value of a burst error rate after forward error correction according to a first order linear fitting relationship.

17. A system for compensating a bit error after forward error correction, comprising the code processing apparatus according to claims 10 to 12 and the decoding processing apparatus according to claims 13 to 16.

## Patentansprüche

1. Verfahren, das durch eine Codierverarbeitungsvorrichtung durchgeführt wird, zur Kompensation eines Bitfehlers nach einer Vorwärtsfehlerkorrektur, umfassend:
Durchführen (201) von Vorwärtsfehlerkorrektur, FEC, Codierung mit einem ersten Datenstrom durch die Codierverarbeitungsvorrichtung, um so einen zweiten Datenstrom zu erhalten, wobei der erste Datenstrom von einem Parallel-seriell- und Seriell-parallel-Konverter Serdes empfangen wird;
Einfügen (202) einer vorgegebenen Kanalüberwachungstrainingssequenz in einen Endbereich des zweiten Datenstroms durch die Codierverarbeitungsvorrichtung, um so einen dritten Datenstrom zu erhalten, wobei der dritte Datenstrom umfasst: den zweiten Datenstrom und die Kanalüberwachungstrainingssequenz, die in den Endbereich des zweiten Datenstroms eingefügt wurde, wobei die Kanalüberwachungstrainingssequenz einen vorgegebenen Sequenzidentifikator trägt;
Durchführen (203) von Modulations- und Codierverarbeitung mit dem dritten Datenstrom durch die Codierverarbeitungsvorrichtung, um so einen vierten Datenstrom zu erhalten;
Durchführen (204) von elektrisch-zu-optisch-Konvertierungsverarbeitung mit dem vierten Datenstrom durch die Codierverarbeitungsvorrichtung, um so einen fünften Datenstrom zu erhalten; und
Senden (205) des fünften Datenstroms an eine Decodierverarbeitungsvorrichtung unter Verwendung eines optischen Signalübertragungsmediums durch die Codierverarbeitungsvorrichtung.

2. Verfahren nach Anspruch 1, wobei das Verfahren nach dem Durchführen (204) von elektrisch-zu-optisch-Konvertierungsverarbeitung mit dem vierten Datenstrom, um so einen fünften Datenstrom zu erhalten, durch die Codierverarbeitungsvorrichtung des Weiteren umfasst:
Durchführen von optischer Multiplexverarbeitung mit dem fünften Datenstrom durch die Codierverarbeitungsvorrichtung, um so den fünften Datenstrom zu erhalten, mit dem optisches Multiplexing durchgeführt worden ist; und
wobei das Senden des fünften Datenstroms an eine Decodierverarbeitungsvorrichtung unter Verwendung eines optischen Signalübertragungsmediums durch die Codierverarbeitungsvorrichtung umfasst:
Senden des fünften Datenstroms, mit dem optisches Multiplexing durchgeführt worden ist, an die Decodierverarbeitungsvorrichtung unter Verwendung des optischen Signalübertragungsmediums durch die Codierverarbeitungsvorrichtung.

3. Verfahren nach Anspruch 1, wobei das Verfahren nach dem Durchführen (203) von Modulations- und Codierverarbeitung mit dem dritten Datenstrom, um so einen vierten Datenstrom zu erhalten, des Weiteren umfasst:
Durchführen von Vorverstärkungsverarbeitung mit einer Hochfrequenzkomponente in dem vierten Datenstrom durch die Codierverarbeitungsvorrichtung, um so den vierten Datenstrom zu erhalten, mit dem Vorverstärkung durchgeführt worden ist; und
das Durchführen von elektrisch-zu-optisch-Konvertierungsverarbeitung mit dem vierten Datenstrom durch die Codierverarbeitungsvorrichtung, um so einen fünften Datenstrom zu erhalten, umfasst:
Durchführen von elektrisch-zu-optisch-Konvertierungsverarbeitung mit dem vierten Datenstrom, mit dem Vorverstärkung durchgeführt worden ist, durch die Codierverarbeitungsvorrichtung, um so einen fünften Datenstrom zu erhalten.

4. Verfahren nach Anspruch 3, wobei das Verfahren nach dem Durchführen von Vorverstärkungsverarbeitung mit einer Hochfrequenzkomponente in dem vierten Datenstrom durch die Codierverarbeitungsvorrichtung, um so den vierten Datenstrom zu erhalten, mit dem Vorverstärkung durchgeführt worden ist, des Weiteren umfasst:
Durchführen von Signalamplitudenverstärkungsverarbeitung mit dem vierten Datenstrom, mit dem Vorverstärkung durchgeführt worden ist, durch die Codierverarbeitungsvorrichtung, um so den vierten Datenstrom zu erhalten, dessen Signalamplitude verstärkt worden ist; und
wobei das Durchführen von elektrisch-zu-optisch-Konvertierungsverarbeitung mit dem vierten Datenstrom durch die Codierverarbeitungsvorrichtung, um so einen fünften Datenstrom zu erhalten, umfasst:
Durchführen von elektrisch-zu-optisch-Konvertierungsverarbeitung mit dem vierten Datenstrom, dessen Signalamplitude verstärkt worden ist, durch die Codierverarbeitungsvorrichtung, um so den fünften Datenstrom zu erhalten.

5. Verfahren, das durch eine Decodierverarbeitungsvorrichtung durchgeführt wird, zur Kompensation eines Bitfehlers nach einer Vorwärtsfehlerkorrektur, umfassend:
Empfangen (301) eines Originaldatenstroms unter Verwendung eines optischen Signalübertragungsmediums durch die Decodierverarbeitungsvorrichtung, wobei der Originaldatenstrom ein Datenstrom ist, der erhalten wird, nachdem die Decodierverarbeitungsvorrichtung einen fünften Datenstrom empfangen hat, der durch eine Codierverarbeitungsvorrichtung gesendet worden ist;
Durchführen (302) von optisch-zu-elektrisch-Konvertierungsverarbeitung mit dem Originaldatenstrom durch die Decodierverarbeitungsvorrichtung, um so einen sechsten Datenstrom zu erhalten;
Durchführen (303) von Modulations- und Decodierverarbeitung mit dem sechsten Datenstrom durch die Decodierverarbeitungsvorrichtung, um so einen siebten Datenstrom zu erhalten;
Erhalten (304) eines Kanalüberwachungstrainingssequenzdetektierungswerts aus dem siebten Datenstrom durch die Decodierverarbeitungsvorrichtung, wobei der Kanalüberwachungstrainingssequenzdetektierungswert ein Sequenzentscheidungswert ist, der erhalten wird, nachdem die Decodierverarbeitungsvorrichtung Sequenzidentifikatordetektierung mit einer Kanalüberwachungstrainingssequenz durchführt, die durch die Codierverarbeitungsvorrichtung gesendet wurde; und
Durchführen (305) von Burstfehlerstatistiksammlung mit dem Kanalüberwachungstrainingssequenzdetektierungswert durch die Decodierverarbeitungsvorrichtung, um so ein Burstfehlerstatistikergebnis zu erhalten, und Berechnen eines Prognosewerts einer Burstfehlerrate nach Art einer linearen Anpassung nach Vorwärtsfehlerkorrektur gemäß dem Burstfehlerstatistikergebnis durch die Decodierverarbeitungsvorrichtung;
Berechnen einer numerischen Beziehung zwischen dem Prognosewert einer Burstfehlerrate nach Vorwärtsfehlerkorrektur und einem vorgegebenen Bitfehlerschwellenwert nach Vorwärtsfehlerkorrektur durch die Decodierverarbeitungsvorrichtung, und Ausgeben eines numerischen Berechnungsergebnisses an einen Mikroprozessor, so dass ein Mikroprozessor die Leistung der Codierverarbeitungsvorrichtung und/oder der Decodierverarbeitungsvorrichtung gemäß dem numerischen Berechnungsergebnis anpasst.

6. Verfahren nach Anspruch 5, wobei das Erhalten (304) eines Kanalüberwachungstrainingssequenzdetektierungswerts aus dem siebten Datenstrom durch die Decodierverarbeitungsvorrichtung umfasst:
Detektieren eines Sequenzidentifikators in dem siebten Datenstrom durch die Decodierverarbeitungsvorrichtung, und wenn der Sequenzidentifikator in dem siebten Datenstrom detektiert wird, Erhalten des Kanalüberwachuntstrainingssequenzdetektierungswerts in dem siebten Datenstrom aus dem Sequenzidentifikator bis zu einem Endbereich des siebten Datenstroms.

7. Verfahren nach Anspruch 5, wobei das Verfahren nach dem Empfangen (301) eines Originaldatenstroms durch eine Decodierverarbeitungsvorrichtung unter Verwendung eines optischen Signalübertragungsmediums des Weiteren umfasst:
Durchführen von optischer Demultiplexverarbeitung mit dem empfangenen Originaldatenstrom durch die Decodierverarbeitungsvorrichtung, um so den Originaldatenstrom zu erhalten, mit dem optisches Demultiplexing durchgeführt worden ist; und wobei das Durchführen von optisch-zu-elektrisch-Konvertierungsverarbeitung mit dem Originaldatenstrom durch die Decodierverarbeitungsvorrichtung, um so einen sechsten Datenstrom zu erhalten, umfasst:
Durchführen von optisch-zu-elektrisch-Konvertierungsverarbeitung mit dem Originaldatenstrom, mit dem optisches Demultiplexing durchgeführt worden ist, durch die Decodierverarbeitungsvorrichtung, um so den sechsten Datenstrom zu erhalten.

8. Verfahren nach Anspruch 5, wobei das Verfahren nach dem Durchführen (302) von optisch-zu-elektrisch-Konvertierungsverarbeitung mit dem Originaldatenstrom, um so einen sechsten Datenstrom zu erhalten, durch die Decodierverarbeitungsvorrichtung des Weiteren umfasst:
Durchführen von Signalausgleichverarbeitung mit dem sechsten Datenstrom durch die Decodierverarbeitungsvorrichtung, um so den sechsten Datenstrom zu erhalten, mit dem Signalausgleich durchgeführt worden ist;
wobei das Durchführen von Modulations- und Decodierverarbeitung mit dem sechsten Datenstrom durch die Decodierverarbeitungsvorrichtung, um so einen siebten Datenstrom zu erhalten, umfasst:
Durchführen von Modulations- und Decodierungsverarbeitung mit dem sechsten Datenstrom, mit dem Signalausgleich durchgeführt worden ist, durch die Decodierverarbeitungsvorrichtung, um den siebten Datenstrom zu erhalten.

9. Verfahren nach Anspruch 5, wobei das Berechnen (305) eines Prognosewerts einer Burstfehlerrate nach Vorwärtsfehlerkorrektor gemäß dem Burstfehlerstatistikergebnis durch die Decodierverarbeitungsvorrichtung umfasst:
Erhalten von mindestens zwei Längen von aufeinander folgenden Burstfehlem und einem Zeitintervall, bei dem jede Länge der aufeinander folgenden Burstfehler generiert wird, in dem Kanalüberwachungstrainingssequenzdetektierungswert durch die Decodierverarbeitungsvorrichtung gemäß dem Burstfehlerstatistikergebnis; und
Durchführen von linearer Anpassung erster Ordnung gemäß den Längen der aufeinander folgenden Burstfehler und den Zeitintervallen, und Berechnen des Prognosewerts einer Burstfehlerrate nach Vorwärtsfehlerkorrektur gemäß einer linearen Anpassungsbeziehung erster Ordnung.

10. Codierverarbeitungsvorrichtung (700), umfassend:
ein Vorwärtsfehlerkorrekturcodiermodul (701), das zum Durchführen von Vorwärtsfehlerkorrektur, FEC, Codierung mit einem ersten Datenstrom konfiguriert ist, um so einen zweiten Datenstrom zu erhalten, wobei der erste Datenstrom von einem Parallel-seriell- und Seriell-parallel-Konverter Serdes empfangen wird;
ein Sequenzeinfügungsmodul (702), das zum Einfügen einer vorgegebenen Kanalüberwachungstrainingssequenz in einen Endbereich des zweiten Datenstroms konfiguriert ist, um so einen dritten Datenstrom zu erhalten, wobei der dritte Datenstrom umfasst: den zweiten Datenstrom und die Kanalüberwachungstrainingssequenz, die in den Endbereich des zweiten Datenstroms eingefügt wurde, wobei die Kanalüberwachungstrainingssequenz einen vorgegebenen Sequenzidentifikator trägt;
ein Modulations- und Codiermodul (703), das zum Durchführen von Modulations-und Codierverarbeitung mit dem dritten Datenstrom konfiguriert ist, um so einen vierten Datenstrom zu erhalten;
ein elektrisch-zu-optisch-Konvertierungsmodul (704), das zum Durchführen von elektrisch-zu-optisch-Konvertierungsverarbeitung mit dem vierten Datenstrom konfiguriert ist, um so einen fünften Datenstrom zu erhalten; und
ein Sendemodul (705), das zum Senden des fünften Datenstroms an eine Decodierverarbeitungsvorrichtung unter Verwendung eines optischen Signalübertragungsmediums konfiguriert ist.

11. Codierverarbeitungsvorrichtung (700) nach Anspruch 10, wobei die Codierverarbeitungsvorrichtung des Weiteren umfasst:
ein Verstärkungsverarbeitungsmodul (707), das konfiguriert ist, um, nachdem das Modulations- und Codiermodul (703) Modulations- und Codierverarbeitung mit dem dritten Datenstrom durchgeführt hat, um den vierten Datenstrom zu erhalten, Vorverstärkungsverarbeitung mit der Hochfrequenzkomponente in dem vierten Datenstrom durchzuführen, um so den vierten Datenstrom zu erhalten, mit dem Vorverstärkung durchgeführt worden ist; und
das elektrisch-zu-optisch-Konvertierungsmodul (704) speziell konfiguriert ist, um elektrisch-zu-optisch-Konvertierungsverarbeitung mit dem vierten Datenstrom durchzuführen, mit dem Vorverstärkung durchgeführt worden ist, um so einen fünften Datenstrom zu erhalten.

12. Codierverarbeitungsvorrichtung (700) nach Anspruch 11, wobei das Verstärkungsverarbeitungsmodul (707) ferner konfiguriert ist, um, nachdem Vorverstärkungsverarbeitung mit der Hochfrequenzkomponente in dem vierten Datenstrom durchgeführt worden ist, um so den vierten Datenstrom zu erhalten, mit dem Vorverstärkung durchgeführt worden ist, Signalamplitudenverstärkungsverarbeitung mit dem vierten Datenstrom durchzuführen, mit dem Vorverstärkung durchgeführt worden ist, um so den vierten Datenstrom zu erhalten, dessen Signalamplitude verstärkt worden ist; und das elektrisch-zu-optisch-Konvertierungsmodul (704) speziell konfiguriert ist, um elektrisch-zu-optisch-Konvertierungsverarbeitung mit dem vierten Datenstrom durchzuführen, dessen Signalamplitude verstärkt worden ist, um so einen fünften Datenstrom zu erhalten.

13. Decodierverarbeitungsvorrichtung (800), umfassend:
ein Empfangsmodul (801), das zum Empfangen eines Originaldatenstroms unter Verwendung eines optischen Signalübertragungsmediums konfiguriert ist, wobei der Originaldatenstrom ein Datenstrom ist, der erhalten wird, nachdem ein von einer Codierverarbeitungsvorrichtung gesendeter fünften Datenstrom empfangen worden ist;
ein optisch-zu-elektrisch-Konvertierungsmodul (802), das zum Durchführen von optisch-zu-elektrisch-Konvertierungsverarbeitung mit dem Originaldatenstrom konfiguriert ist, um so einen sechsten Datenstrom zu erhalten;
ein Modulations- und Decodiermodul (803), das zum Durchführen von Modulations-und Decodierverarbeitung mit dem sechsten Datenstrom konfiguriert ist, um so einen siebten Datenstrom zu erhalten;
ein Sequenzdetektierungsmodul (804), das zum Erhalten eines Kanalüberwachungstrainingssequenzdetektierungswerts aus dem siebten Datenstrom konfiguriert ist, wobei der Kanalüberwachungstrainingssequenzdetektierungswert ein Sequenzentscheidungswert ist, der erhalten wird, nachdem die Sequenzidentifikatordetektierung mit einer Kanalüberwachungstrainingssequenz durchführt worden ist, die durch die Codierverarbeitungsvorrichtung gesendet wurde; und
ein Burstfehlerverarbeitungsmodul (805), das zum Durchführen von Burstfehlerstatistikssammlung mit dem Kanalüberwachungstrainingssequenzdetektierungswert, um so ein Burstfehlerstatistikergebnis zu erhalten, und Berechnen eines Prognosewerts einer Burstfehlerrate nach Art einer linearen Anpassung nach Vorwärtsfehlerkorrektur gemäß dem Burstfehlerstatistikergebnis konfiguriert ist;
wobei das Burstfehlerverarbeitungsmodul (805) ferner konfiguriert ist, um, nach Berechnen des Prognosewerts einer Burstfehlerrate nach Vorwärtsfehlerkorrektur gemäß dem Burstfehlerstatistikergebnis, eine numerische Beziehung zwischen dem Prognosewert einer Burstfehlerrate nach Vorwärtsfehlerkorrektur und einem vorbestimmten Bitfehlerschwellenwert nach Vorwärtsfehlerkorrektur zu berechnen, und ein numerisches Berechnungsergebnis an einen Mikroprozessor auszugeben, so dass der Mikroprozessor die Leistung der Codierverarbeitungsvorrichtung und/oder der Decodierverarbeitungsvorrichtung gemäß dem numerischen Berechnungsergebnis anpasst.

14. Decodierverarbeitungsvorrichtung (800) nach Anspruch 13, wobei das Sequenzdetektierungsmodul (804) speziell konfiguriert ist, um einen Sequenzidentifikator in dem siebten Datenstrom zu detektieren, und wenn der Sequenzidentifikator in dem siebten Datenstrom detektiert wird, den Kanalüberwachungstrainingssequenzdetektierungswert in dem siebten Datenstrom aus dem Sequenzidentifikator bis zu einem Endbereich des siebten Datenstroms zu erhalten.

15. Decodierverarbeitungsvorrichtung (800) nach Anspruch 13, wobei die Decodierverarbeitungsvorrichtung des Weiteren umfasst: ein optisches Demultiplexing-Modul (806), das konfiguriert ist, um, nachdem das Empfangsmodul (801) den Originaldatenstrom unter Verwendung des optischen Signalübertragungsmediums empfangen hat, optische Demultiplexing-Verarbeitung mit dem empfangenen Originaldatenstrom durchzuführen, um so den Originaldatenstrom zu erhalten, mit dem optisches Demultiplexing durchgeführt worden ist; und
das optisch-zu-elektrisch-Konvertierungsmodul (802) speziell konfiguriert ist, um optisch-zu-elektrisch-Konvertierungsverarbeitung mit dem Originaldatenstrom durchzuführen, mit dem optisches Demultiplexing durchgeführt worden ist, um so den sechsten Datenstrom zu erhalten.

16. Decodierverearbeitungsvorrichtung (800) nach Anspruch 13, wobei das Burstfehlerverarbeitungsmodul (805) speziell konfiguriert ist, um entsprechend dem Burstfehlerstatistikergebnis, mindestens zwei Längen aufeinander folgender Burstfehler und ein Zeitintervall, bei dem jede Länge aufeinander folgender Burstfehler generiert wird, in dem Kanalüberwachungstrainingssequenzdetektierungswert zu erhalten; und lineare Anpassung erster Ordnung gemäß den Längen der aufeinander folgenden Burstfehler und den Zeitintervallen durchzuführen, und den Prognosewert einer Burstfehlerrate nach Vorwärtsfehlerkorrektur gemäß einer linearen Anpassungsbeziehung erster Ordnung zu berechnen.

17. System zur Kompensation eines Bitfehlers nach Vorwärtsfehlerkorrektur, umfassend die Codeverarbeitungsvorrichtung nach den Ansprüchen 10 bis 12 und die Decodierverarbeitungsvorrichtung nach den Ansprüchen 13 bis 16.

## Revendications

1. Procédé réalisé par un appareil de traitement de codage pour compenser une erreur sur les bits après une correction d'erreurs sans voie de retour, consistant :
à effectuer (201), au moyen de l'appareil de traitement de codage, un codage de correction d'erreurs sans voie de retour (FEC) sur un premier flux de données de sorte à obtenir un deuxième flux de données, dans lequel le premier flux de données est reçu d'un convertisseur Serdes parallèle-série et série-parallèle ;
à insérer (202), au moyen de l'appareil de traitement de codage, une séquence d'apprentissage de surveillance de canal prédéfinie à la queue du deuxième flux de données de sorte à obtenir un troisième flux de données, dans lequel le troisième flux de données comprend : le deuxième flux de données et la séquence d'apprentissage de surveillance de canal insérée à la queue du deuxième flux de données, dans lequel la séquence d'apprentissage de surveillance de canal comporte un identifiant de séquence prédéfini ;
à effectuer (203), au moyen de l'appareil de traitement de codage, un traitement de modulation et de codage sur le troisième flux de données de sorte à obtenir un quatrième flux de données ;
à effectuer (204), au moyen de l'appareil de traitement de codage, un traitement de conversion électrique-optique sur le quatrième flux de données de sorte à obtenir un cinquième flux de données ; et
à envoyer (205), au moyen de l'appareil de traitement de codage, le cinquième flux de données à un appareil de traitement de décodage en utilisant un support de transmission de signal optique.

2. Procédé selon la revendication 1, dans lequel, après la réalisation (204), par l'appareil de traitement de codage, d'un traitement de conversion électrique-optique sur le quatrième flux de données de sorte à obtenir un cinquième flux de données, le procédé consiste en outre :
à effectuer, au moyen de l'appareil de traitement de codage, un traitement de multiplexage optique sur le cinquième flux de données de sorte à obtenir le cinquième flux de données sur lequel un multiplexage optique est effectué ; et
l'envoi, par l'appareil de traitement de codage, du cinquième flux de données à un appareil de traitement de décodage en utilisant un support de transmission de signal optique consiste :
à envoyer, au moyen de l'appareil de traitement de codage, le cinquième flux de données sur lequel un multiplexage optique est effectué, à l'appareil de traitement de décodage en utilisant le support de transmission de signal optique.

3. Procédé selon la revendication 1, dans lequel, après la réalisation (203), par l'appareil de traitement de codage, d'un traitement de modulation et de codage sur le troisième flux de données de sorte à obtenir un quatrième flux de données, le procédé consiste en outre :
à effectuer, au moyen de l'appareil de traitement de codage, un traitement de pré-amplification sur une composante haute fréquence dans le quatrième flux de données de sorte à obtenir le quatrième flux de données sur lequel une pré-amplification est effectuée ; et
la réalisation, par l'appareil de traitement de codage, d'un traitement de conversion électrique-optique sur le quatrième flux de données de sorte à obtenir un cinquième flux de données consiste :
à effectuer, au moyen de l'appareil de traitement de codage, un traitement de conversion électrique-optique sur le quatrième flux de données sur lequel une pré-amplification est effectuée, de sorte à obtenir le cinquième flux de données.

4. Procédé selon la revendication 3, dans lequel, après la réalisation, par l'appareil de traitement de codage, d'un traitement de pré-amplification sur une composante haute fréquence dans le quatrième flux de données de sorte à obtenir le quatrième flux de données sur lequel une pré-amplification est effectuée, le procédé consiste en outre :
à effectuer, au moyen de l'appareil de traitement de codage, un traitement d'amplification d'amplitude de signal sur le quatrième flux de données sur lequel une pré-amplification est effectuée, de sorte à obtenir le quatrième flux de données dont une amplitude de signal est amplifiée ; et
la réalisation, par l'appareil de traitement de codage, d'un traitement de conversion électrique-optique sur le quatrième flux de données de sorte à obtenir un cinquième flux de données consiste :
à effectuer, au moyen de l'appareil de traitement de codage, un traitement de conversion électrique-optique sur le quatrième flux de données dont une amplitude de signal est amplifiée, de sorte à obtenir le cinquième flux de données.

5. Procédé réalisé par un appareil de traitement de décodage pour compenser une erreur sur les bits après une correction d'erreurs sans voie de retour, consistant :
à recevoir (301), au moyen de l'appareil de traitement de décodage, un flux de données d'origine en utilisant un support de transmission de signal optique, dans lequel le flux de données d'origine est un flux de données obtenu après que l'appareil de traitement de décodage reçoit un cinquième flux de données envoyé par un appareil de traitement de codage ;
à effectuer (302), au moyen de l'appareil de traitement de décodage, un traitement de conversion optique-électrique sur le flux de données d'origine de sorte à obtenir un sixième flux de données ;
à effectuer (303), au moyen de l'appareil de traitement de décodage, un traitement de modulation et de décodage sur le sixième flux de données de sorte à obtenir un septième flux de données ;
à obtenir (304), au moyen de l'appareil de traitement de décodage, une valeur de détection de séquence d'apprentissage de surveillance de canal à partir du septième flux de données, dans lequel la valeur de détection de séquence d'apprentissage de surveillance de canal est une valeur de décision de séquence obtenue après que l'appareil de traitement de décodage effectue une détection d'identifiant de séquence sur une séquence d'apprentissage de surveillance de canal envoyée par l'appareil de traitement de codage ; et
à effectuer (305), au moyen de l'appareil de traitement de décodage, une collecte de statistiques d'erreurs sur les rafales sur la valeur de détection de séquence d'apprentissage de surveillance de canal de sorte à obtenir un résultat statistique d'erreurs sur les rafales et à calculer, au moyen de l'appareil de traitement de décodage, une valeur de prédiction d'un taux d'erreurs sur les rafales par superposition linéaire après une correction d'erreurs sans voie de retour en fonction du résultat statistique d'erreurs sur les rafales ;
à calculer, au moyen de l'appareil de traitement de décodage, une relation numérique entre la valeur de prédiction d'un taux d'erreurs sur les rafales après une correction d'erreurs sans voie de retour et un seuil prédéfini d'erreurs sur les bits après une correction d'erreurs sans voie de retour et à transmettre un résultat de calcul numérique à un microprocesseur de telle sorte qu'un microprocesseur ajuste la puissance de l'appareil de traitement de codage et/ou de l'appareil de traitement de décodage en fonction du résultat de calcul numérique.

6. Procédé selon la revendication 5, dans lequel l'obtention (304), par l'appareil de traitement de décodage, d'une valeur de détection de séquence d'apprentissage de surveillance de canal à partir du septième flux de données consiste :
à détecter, au moyen de l'appareil de traitement de décodage, un identifiant de séquence dans le septième flux de données et, lorsque l'identifiant de séquence est détecté dans le septième flux de données, à obtenir la valeur de détection de séquence d'apprentissage de surveillance de canal dans le septième flux de données à partir de l'identifiant de séquence jusqu'à la queue du septième flux de données.

7. Procédé selon la revendication 5, dans lequel, après la réception (301), par l'appareil de traitement de décodage, d'un flux de données d'origine en utilisant un support de transmission de signal optique, le procédé consiste en outre :
à effectuer, au moyen de l'appareil de traitement de décodage, un traitement de démultiplexage optique sur le flux de données d'origine reçu de sorte à obtenir le flux de données d'origine sur lequel un démultiplexage optique est effectué ; et
la réalisation, par l'appareil de traitement de décodage, d'un traitement de conversion optique-électrique sur le flux de données d'origine de sorte à obtenir un sixième flux de données consiste :
à effectuer, au moyen de l'appareil de traitement de décodage, un traitement de conversion optique-électrique sur le flux de données d'origine sur lequel un démultiplexage optique est effectué, de sorte à obtenir le sixième flux de données.

8. Procédé selon la revendication 5, dans lequel, après la réalisation (302), par l'appareil de traitement de décodage, d'un traitement de conversion optique-électrique sur le flux de données d'origine de sorte à obtenir un sixième flux de données, le procédé consiste en outre :
à effectuer, au moyen de l'appareil de traitement de décodage, un traitement d'équilibrage de signaux sur le sixième flux de données de sorte à obtenir le sixième flux de données sur lequel un équilibrage de signaux est effectué ;
la réalisation, par l'appareil de traitement de décodage, d'un traitement de modulation et de décodage sur le sixième flux de données de sorte à obtenir un septième flux de données consiste :
à effectuer, au moyen de l'appareil de traitement de décodage, un traitement de modulation et de décodage sur le sixième flux de données sur lequel un équilibrage de signaux est effectué, de sorte à obtenir le septième flux de données.

9. Procédé selon la revendication 5, dans lequel le calcul (305), par l'appareil de traitement de décodage, d'une valeur de prédiction d'un taux d'erreurs sur les rafales après une correction d'erreurs sans voie de retour en fonction du résultat statistique d'erreurs sur les rafales consiste :
à obtenir, au moyen de l'appareil de traitement de décodage en fonction du résultat statistique d'erreurs sur les rafales, au moins deux longueurs d'erreurs consécutives sur les rafales et un intervalle de temps auquel chaque longueur d'erreurs consécutives sur les rafales est générée dans la valeur de détection de séquence d'apprentissage de surveillance de canal ; et
à effectuer une superposition linéaire de premier ordre en fonction des longueurs d'erreurs consécutives sur les rafales et des intervalles de temps, et à calculer la valeur de prédiction d'un taux d'erreurs sur les rafales après une correction d'erreurs sans voie de retour en fonction d'une relation de superposition linéaire de premier ordre.

10. Appareil de traitement de codage (700) comprenant :
un module de codage de correction d'erreurs sans voie de retour (701), configuré pour effectuer un codage de correction d'erreurs sans voie de retour (FEC) sur un premier flux de données de sorte à obtenir un deuxième flux de données, dans lequel le premier flux de données est reçu d'un convertisseur Serdes parallèle-série et série-parallèle ;
un module d'insertion de séquence (702), configuré pour insérer une séquence d'apprentissage de surveillance de canal prédéfinie à la queue du deuxième flux de données de sorte à obtenir un troisième flux de données, et le troisième flux de données comprend : le deuxième flux de données et la séquence d'apprentissage de surveillance de canal insérée à la queue du deuxième flux de données, dans lequel la séquence d'apprentissage de surveillance de canal comporte un identifiant de séquence prédéfini ;
un module de modulation et de codage (703), configuré pour effectuer un traitement de modulation et de codage sur le troisième flux de données de sorte à obtenir un quatrième flux de données ;
un module de conversion électrique-optique (704), configuré pour effectuer un traitement de conversion électrique-optique sur le quatrième flux de données de sorte à obtenir un cinquième flux de données ; et
un module d'envoi (705), configuré pour envoyer le cinquième flux de données à un appareil de traitement de décodage en utilisant un support de transmission de signal optique.

11. Appareil de traitement de codage (700) selon la revendication 10, dans lequel l'appareil de traitement de codage comprend en outre : un module de traitement d'amplification (707), configuré : après que le module de modulation et de codage (703) effectue un traitement de modulation et de codage sur le troisième flux de donnée de sorte à obtenir le quatrième flux de données, pour effectuer un traitement de pré-amplification sur une composante haute fréquence dans le quatrième flux de données de sorte à obtenir le quatrième flux de données sur lequel une pré-amplification est effectuée ; et
le module de conversion électrique-optique (704) est spécifiquement configuré pour effectuer un traitement de conversion électrique-optique sur le quatrième flux de données sur lequel une pré-amplification est effectuée, de sorte à obtenir le cinquième flux de données.

12. Appareil de traitement de codage (700) selon la revendication 11, dans lequel le module de traitement d'amplification (707) est en outre configuré : après la réalisation d'un traitement de pré-amplification sur la composante haute fréquence dans le quatrième flux de données de sorte à obtenir le quatrième flux de données sur lequel une pré-amplification est effectuée, pour effectuer un traitement d'amplification d'amplitude de signal sur le quatrième flux de données sur lequel une pré-amplification est effectuée, de sorte à obtenir le quatrième flux de données dont une amplitude de signal est amplifiée ; et
le module de conversion électrique-optique (704) est spécifiquement configuré pour effectuer un traitement de conversion électrique-optique sur le quatrième flux de données dont une amplitude de signal est amplifiée, de sorte à obtenir le cinquième flux de données.

13. Appareil de traitement de décodage (800) comprenant :
un module de réception (801), configuré pour recevoir un flux de données d'origine en utilisant un support de transmission de signal optique, dans lequel le flux de données d'origine est un flux de données obtenu après qu'un cinquième flux de données envoyé par un appareil de traitement de codage est reçu ;
un module de conversion optique-électrique (802), configuré pour effectuer un traitement de conversion optique-électrique sur le flux de données d'origine de sorte à obtenir un sixième flux de données ;
un module de modulation et de décodage (803), configuré pour effectuer un traitement de modulation et de décodage sur le sixième flux de données de sorte à obtenir un septième flux de données ;
un module de détection de séquence (804), configuré pour obtenir une valeur de détection de séquence d'apprentissage de surveillance de canal à partir du septième flux de données, dans lequel la valeur de détection de séquence d'apprentissage de surveillance de canal est une valeur de décision de séquence obtenue après qu'une détection d'identifiant de séquence est effectuée sur une séquence d'apprentissage de surveillance de canal envoyée par l'appareil de traitement de codage ; et
un module de traitement d'erreurs sur les rafales (805), configuré pour effectuer une collecte de statistiques d'erreurs sur les rafales sur la valeur de détection de séquence d'apprentissage de surveillance de canal de sorte à obtenir un résultat statistique d'erreurs sur les rafales et pour calculer une valeur de prédiction d'un taux d'erreurs sur les rafales par superposition linéaire après une correction d'erreurs sans voie de retour en fonction du résultat statistique d'erreurs sur les rafales ;
le module de traitement d'erreurs sur les rafales (805) est en outre configuré : après le calcul de la valeur de prédiction d'un taux d'erreurs sur les rafales après une correction d'erreurs sans voie de retour en fonction du résultat statistique d'erreurs sur les rafales, pour calculer une relation numérique entre la valeur de prédiction d'un taux d'erreurs sur les rafales après une correction d'erreurs sans voie de retour et un seuil prédéfini d'erreurs sur les bits après une correction d'erreurs sans voie de retour et pour transmettre un résultat de calcul numérique à un microprocesseur de telle sorte que le microprocesseur ajuste la puissance de l'appareil de traitement de codage et/ou de l'appareil de traitement de décodage en fonction du résultat de calcul numérique.

14. Appareil de traitement de décodage (800) selon la revendication 13, dans lequel le module de détection de séquence (804) est spécifiquement configuré : pour détecter un identifiant de séquence dans le septième flux de données et, lorsque l'identifiant de séquence est détecté dans le septième flux de données, pour obtenir la valeur de détection de séquence d'apprentissage de surveillance de canal dans le septième flux de données à partir de l'identifiant de séquence jusqu'à la queue du septième flux de données.

15. Appareil de traitement de décodage (800) selon la revendication 13, dans lequel l'appareil de traitement de décodage comprend en outre : un module de démultiplexage optique (806) configuré : après que le module de réception (801) reçoit le flux de données d'origine en utilisant le support de transmission de signal optique, pour effectuer un traitement de démultiplexage optique sur le flux de données d'origine reçu de sorte à obtenir le flux de données d'origine sur lequel un démultiplexage optique est effectué ; et
le module de conversion optique-électrique (802) est spécifiquement configuré pour effectuer un traitement de conversion optique-électrique sur le flux de données d'origine sur lequel un démultiplexage optique est effectué, de sorte à obtenir le sixième flux de données.

16. Appareil de traitement de décodage (800) selon la revendication 13, dans lequel le module de traitement d'erreur sur les rafales (805) est spécifiquement configuré : pour obtenir, en fonction du résultat statistique d'erreurs sur les rafales, au moins deux longueurs d'erreurs consécutives sur les rafales et un intervalle de temps auquel chaque longueur d'erreurs consécutives sur les rafales est générée dans la valeur de détection de séquence d'apprentissage de surveillance de canal ; et pour effectuer une superposition linéaire de premier ordre en fonction des longueurs d'erreurs consécutives sur les rafales et des intervalles de temps, et pour calculer la valeur de prédiction d'un taux d'erreurs sur les rafales après une correction d'erreurs sans voie de retour en fonction d'une relation de superposition linéaire de premier ordre.

17. Système pour compenser une erreur sur les bits après une correction d'erreurs sans voie de retour, comprenant l'appareil de traitement de code selon les revendications 10 à 12 et l'appareil de traitement de décodage selon les revendications 13 à 16.
